# EUROPEAN PATENT SPECIFICATION

(11) **EP 4 485 766 B1**
(45) Date of publication and mention of the grant of the patent: **02.12.2026**
(21) Application number: 23759304.1
(22) Date of filing: 27.02.2023
(51) Int. Cl.: H02K 11/30, F01M 1/02, F04C 2/10, F04C 11/00, F04C 27/00, F04C 29/00

(54) **ELECTRIC PUMP AND MANUFACTURING METHOD FOR ELECTRIC PUMP**
ELEKTRISCHE PUMPE UND HERSTELLUNGSVERFAHREN FÜR ELEKTRISCHE PUMPE
POMPE ÉLECTRIQUE ET PROCÉDÉ DE FABRICATION DE POMPE ÉLECTRIQUE

(30) Priority: 25.02.2022 CN 202210179037; 25.02.2022 CN 202210179036
(43) Date of publication of application: 01.01.2025
(73) Proprietor: Zhejiang Sanhua Automotive Components Co., Ltd., Hangzhou, Zhejiang 310018 (CN)
(72) Inventor: ZHU, Shuting, Hangzhou, Zhejiang 310018 (CN); YE, Wei, Hangzhou, Zhejiang 310018 (CN)
(74) Representative: Maikowski & Ninnemann Patentanwälte Partnerschaft mbB
(86) International application number: PCT/CN2023/078314
(87) International publication number: WO 2023/160683

(56) References cited:
- CN-A- 107 182 171
- CN-A- 107 182 171
- CN-A- 110 541 818
- CN-U- 201 486 915
- CN-U- 207 852 485
- CN-U- 207 852 485
- CN-U- 213 184 005
- JP-A- 2003 272 964
- JP-A- 2011 228 639
- JP-A- 2012 079 756
- JP-A- 2013 232 586
- JP-A- 2015 055 201
- JP-A- 2021 521 380
- JP-A- H 113 840

## Description

The present application claims the priorities to Chinese Patent Applications No. 202210179037.X, titled "ELECTRIC PUMP AND MANUFACTURING METHOD FOR ELECTRIC PUMP", and No. 202210179036.5, titled "CONTROL BOARD ASSEMBLY, MANUFACTURING METHOD FOR CONTROL BOARD ASSEMBLY, AND ELECTRIC PUMP", filed with the China National Intellectual Property Administration on Feb. 25, 2022.

### FIELD

The present application relates to the technical field of vehicle, and in particular to components of a lubrication system and/or a cooling system of the vehicle.

### BACKGROUND

An electric pump is mainly used to supply power to a lubrication system and/or a cooling system of a vehicle. The electric pump includes a control board assembly. If being exposed to a corrosive medium for a long time, an electronic component of the control board assembly may easily fail. Therefore, a technical problem is how to effectively prevent the electronic component from failing in a corrosive environment.

JP 2021 521380 A discloses an electric oil pump, which includes a pump housing provided with an a first cavity and a second cavity; a first rotor assembly disposed in the first cavity; a stator assembly and a second rotor assembly that are disposed in the second cavity; an electric control board assembly; an isolating member, the stator assembly is disposed at a first side of the isolating member, the electric control board assembly is disposed at a second side of the isolating member; and a wiring terminal fixedly connected to the isolating member. JP 2011 228639 A discloses an electric device, which includes: a circuit board arranged in cooling medium in a housing and having an electric element and an external coupling electrode, the electric element is sealed in and mounted in a substrate, and the electric element is electrically coupled with the external coupling electrode; an external coupling terminal electrically coupled with the external coupling electrode; and a separation member for separating the external coupling terminal and a connection portion between the external coupling electrode and the external coupling terminal away from the cooling medium. CN 207 852 485 U discloses a electrolytic capacitor of installation back, including an aluminum shell, an electric capacity core, an outer protective shell is provided on the outer wall of the aluminum shell and has a spacing groove on the outer wall of aluminum shell upper end, a fixing base is provided outside the aluminum shell. CN 107 182 171 A discloses a sealing protection apparatus for a BGA device, and a sealing method of the sealing protection apparatus. The apparatus includes a prefabricated sealing piece, sealing glue, the BGA device and a printed circuit board. The prefabricated sealing piece is disposed at a gap between the periphery of the BGA device and the printed circuit board, and the bottom surface of the prefabricated sealing piece makes contact with the top surface of the printed circuit board. A side surface of the prefabricated sealing piece in the length direction makes contact with a side surface of the BGA device. JP 200 3272964 A discloses an aluminum electrolytic capacitor, including a sealing plate of a metal case. The sealing plate has a metal piece which is made by laminating two kinds of metal plates having different thermal expansion coefficients. If the inside temperature rises when using, this metal piece 6 bends to the smaller thermal coefficient side. When this capacitor is mounted on a circuit board of an electric apparatus, this bending metal piece pushes a switch mounted on the board and cuts off the power to the capacitor.

### SUMMARY

An object of the present application is to provide an electric pump and a manufacturing method for the electric pump, which is beneficial to preventing failure of electronic components.

To achieve the above object, an electric pump is provided according to one aspect of the present application. The electric pump includes a stator assembly and a control board assembly that are electrically connected, where
the electric pump includes an accommodation chamber, the control board assembly is located inside the accommodation chamber, and the control board assembly includes a substrate and electronic components;
when the electric pump is in operation, a working medium is provided inside the accommodation chamber, and the electronic components and the substrate contact the working medium;
at least one of the electronic components includes a pin and a first end portion facing the substrate, the first end portion and the pin of the at least one of the electronic components are at a same side, and the pin of the at least one of the electronic components is electrically connected to the substrate; and
a portion where the substrate matches with the at least one of the electronic components is defined as a matching portion, and the control board assembly is provided with a sealing portion at the matching portion, or the control board assembly is provided with a sealing portion outside the matching portion only at the first end portion, to prevent the working medium from entering a portion where the first end portion of the at least one of the electronic components is located, and the sealing portion is oil-sealedly connected to a surface of the substrate.

According to the present technical solution of the present application, each electronic component includes the pin and the first end portion facing the substrate, the first end portion and the pin of the electronic component are at the same side, and the pin of the electronic component is electrically connected to the substrate. The portion where the substrate matches with the electronic component is defined as the matching portion, and the control board assembly is provided with the sealing portion at the matching portion, or the control board assembly is provided with the sealing portion outside the matching portion, so as to prevent the working medium from entering the portion where the first end portion of the electronic component is located. As such, it is beneficial to preventing the working medium from entering into the electronic components, which protects the electronic component and is beneficial to reducing failure of the electronic components, thereby improving the service life of the electric pump.

A manufacturing method for an electric pump is further provided according to another aspect of the present application. The method includes:
apply a first sealing material to an outer side of a matching portion along a circumferential direction;
solidify the first sealing material, such that the first sealing material is oil-sealedly connected to a surface of a substrate, and the first sealing material is oil-sealedly connected to an outer circumferential side of an outer wall surface of a first end portion;
assemble a control board assembly with a stator assembly, and locate an assembly of the control board assembly and the stator assembly inside an accommodation chamber of the electric pump; or
locate the stator assembly inside the accommodation chamber of the electric pump, assembling the control board assembly inside the accommodation chamber of the electric pump, and electrically connect the control board assembly and the stator assembly; and
assemble a first rotor assembly inside the accommodation chamber of the electric pump; where a portion where the first rotor assembly is located is in communication with a portion where the control board assembly is located. As such, the manufacturing process of the sealing portion is simple, which is beneficial to volume production.

A manufacturing method for an electric pump is further provided according to a third aspect of the present application. The method includes:
apply a second sealing material inside a matching portion;
solidify the second sealing material, such that the second sealing material is oil-sealedly connected to a surface of a substrate, and the second sealing material is oil-sealedly connected to an end face of a first end portion;
assemble a control board assembly with a stator assembly, and locate an assembly of the control board assembly and the stator assembly inside an accommodation chamber of the electric pump; or
locate the stator assembly inside the accommodation chamber of the electric pump, assemble the control board assembly inside the accommodation chamber of the electric pump, and electrically connect the control board assembly and the stator assembly; and
assemble a first rotor assembly inside the accommodation chamber of the electric pump; where a portion where the first rotor assembly is located is in communication with a portion where the control board assembly is located. As such, the sealing portion occupies less area on the substrate, which makes space for the arrangement of the electronic components and thus is beneficial to a miniaturization design of the control board assembly.

### BRIEF DESCRIPTION OF THE DRAWINGS

FIG. 1 is a schematic structural cross-sectional view of an embodiment of an electric pump according to the present application;
FIG. 2 is a schematic structural view of a first flow path of the embodiment of the electric pump according to the present application;
FIG. 3 is a schematic structural cross-sectional view of another embodiment of the electric pump according to the present application;
FIG. 4 is a schematic perspective view showing the structure of a control board assembly in FIG. 1 and FIG. 3 from one perspective;
FIG. 5 is a schematic perspective view showing the structure of the control board assembly in FIG. 1 and FIG. 3 from another perspective;
FIG. 6 is a schematic structural view of an embodiment of the control board assembly in FIG. 1 and FIG. 3;
FIG. 7 is a schematic structural cross-sectional view of the control board assembly in FIG. 6 taken along a line A-A;
FIG. 8 is a schematic structural view of another embodiment of the control board assembly in FIG. 1 and FIG. 3;
FIG. 9 is a schematic structural cross-sectional view of the control board assembly in FIG. 8 taken along a line B-B;
FIG. 10 is a schematic structural view of a third embodiment of the control board assembly in FIG. 1 and FIG. 3;
FIG. 11 is a schematic structural view of a fourth embodiment of the control board assembly in FIG. 1 and FIG. 3;
FIG. 12 is a schematic structural view of a fifth embodiment of the control board assembly in FIG. 1 and FIG. 3;
FIG. 13 is a schematic structural view of a sixth embodiment of the control board assembly in FIG. 1 and FIG. 3;
FIG. 14 is a schematic enlarged structural view of a portion C in FIG. 6;
FIG. 15 is a schematic enlarged structural view of a portion D in FIG. 8;
FIG. 16 is a schematic structural view of a seventh embodiment of the control board assembly in FIG. 1 and FIG. 3;
FIG. 17 is a schematic structural view of an eighth embodiment of the control board assembly in FIG. 1 and FIG. 3; and
FIG. 18 is a schematic structural view of a ninth embodiment of the control board assembly in FIG. 1 and FIG. 3.

### DETAILED DESCRIPTION OF THE EMBODIMENTS

The present application is further described hereinafter in conjunction with the drawings and specific embodiments.

The specific embodiments of the present application are further described in detail hereinafter in conjunction with the drawings. First, it should be noted that the directional terms "up", "down", "left", "right", "front", "back", "inside", "outside", "top", "bottom" and the like mentioned or may be mentioned in the specification of the present application are defined relative to the structure shown in the corresponding drawings. They are relative concepts and may change according to different positions and different usage conditions. Therefore, these or other directional terms should not be interpreted as restrictive terms.

An electric pump according to the embodiments hereinafter is mainly used to supply power for circulation of a working medium of a lubrication system and/or a cooling system of a vehicle, and specifically to supply power for circulation of a working medium of a lubrication system and/or a cooling system of a transmission system of the vehicle.

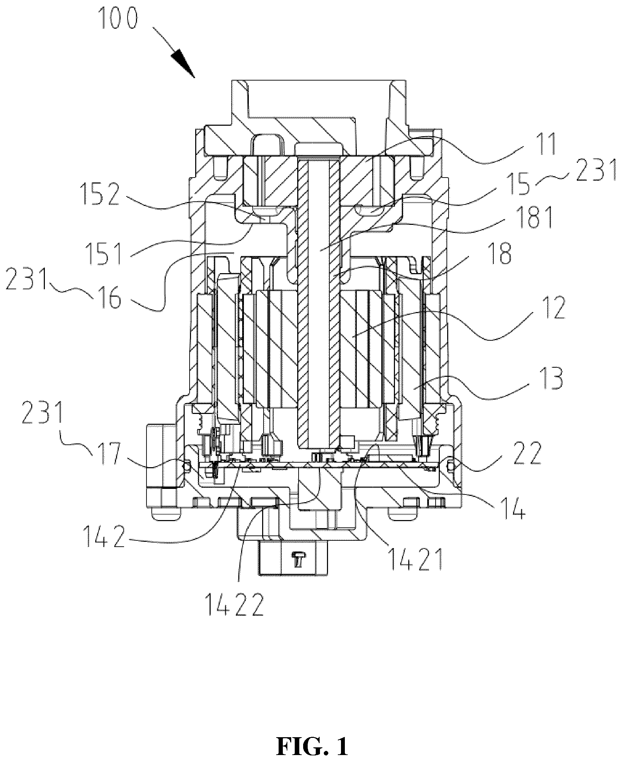

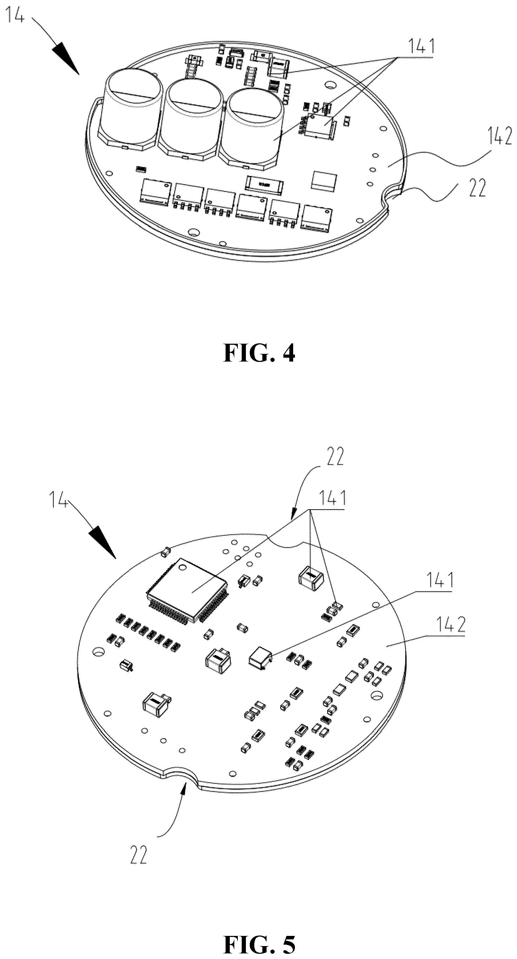

Referring to FIG. 1 to FIG. 18, an electric pump 100 includes a pump housing, a first rotor assembly 11, a second rotor assembly 12, a stator assembly 13 and a control board assembly 14. The first rotor assembly 11 and the second rotor assembly 12 are connected in transmission, and the stator assembly 13 and the control board assembly 14 are electrically connected. The stator assembly 13 includes a stator core, an insulation rack and a winding. The insulation rack at least wraps at least a part of a surface of the stator core, and the winding is wound on the insulation rack. Herein, the control board assembly 14 may implement a function of supplying power to a coil in the stator assembly 13 as well as a function of controlling the operation of the first rotor assembly 11 in real time according to an operation environment. The electric pump 100 further includes a first accommodation chamber 16, a second accommodation chamber 17, a third accommodation chamber 15, and a communication portion 22. The first rotor assembly 11 is arranged inside the third accommodation chamber 15, and the pump housing is provided with an accommodation chamber 231. Specifically, the pump housing includes a first housing and a second housing, and the first housing and the second housing are sealedly and fixedly connected to form the accommodation chamber. The control board assembly 14 is located inside the accommodation chamber. The first accommodation chamber 16 is at one side of the control board assembly 14, and the stator assembly 13 is located inside the first accommodation chamber 16. The second accommodation chamber 17 is at the other side of the control board assembly 14, and the first accommodation chamber 16 and the second accommodation chamber 17 are in communication at least through the communication portion 22. The control board assembly 14 includes a substrate 142, electronic components 141 and a sealing portion. The substrate 142 includes a first surface 1421 and a second surface 1422. Along an axial direction of the electric pump, the first surface 1421 is positioned closer to the stator assembly 13 than the second surface 1422 is. At least part of the electronic components 141 are located at a same side as the first surface 1421, or at least part of the electronic components 14 are located at a same side as the second surface 1422. The electronic component 141 that is located at the same side as the first surface 1421 is defined as a first electronic component, and the electronic component 141 that is located at the same side as the second surface 1422 is defined as a second electronic component. A wall surface of the first accommodation chamber 16 at least includes an outer wall surface of the first electronic component, or a wall surface of the second accommodation chamber 17 at least includes an outer wall surface of the second electronic component. When the electric pump is in operation, a working medium flows inside the first accommodation chamber 16 and the second accommodation chamber 17. It may be appreciated that, if the working medium flows through the first accommodation chamber, the first electronic component contacts the working medium inside the first accommodation chamber. If the working medium flows through the second accommodation chamber, the second electronic component contacts the working medium inside the second accommodation chamber. At least one of the electronic components includes a pin and a first end portion facing the substrate. Specifically, the electronic component 141 includes a housing 1411, and the housing 1411 includes the first end portion 1413. It may be appreciated that, the first end portion 1413 includes one end of the housing that is located at a same side as the pin of the electronic component, and the first end portion 1413 is located at the same side as the pin of the electronic component 141. A portion of the substrate 142 that matches with the electronic component 141 is defined as a matching portion 24, and the control board assembly 14 is provided with a sealing portion 143 at the matching portion 24, or the control board assembly 14 is provided with a sealing portion outside the matching portion 24, so as to prevent the working medium from entering a portion where the first end portion of the electronic component is located. It should be noted that, the working medium mentioned herein and hereinafter includes but is not limited to oil, and includes other working mediums that can be provided inside the accommodation chamber and contact the electronic components. The pin of the electronic component 141 is electrically connected to the substrate 142. The sealing portion 143 and the first end portion 1413 are at a same side. The sealing portion 143 includes a blocking surface 1435, and the control board assembly 14 includes a sealing portion 146. A wall surface of the sealing portion 146 at least includes the blocking surface 1435, a surface of the substrate 142 and an inner wall surface of the housing 1411. Alternatively, the electronic component 141 includes a sealing pad 1412, and the sealing portion 143 includes a main portion 1436. An outer side portion 1437 is configured as an outer circumferential wall surface of the main portion 1436. The outer side portion 1437 is sealedly connected to an inner wall surface of the first end portion 1413 along a whole circumference, and the main portion 1436 covers a surface of the sealing pad 1412. It should be noted that, the main portion 1436 that covers the sealing pad 1412 may contact or not contact the sealing pad 1412, as long as a projection of the sealing pad 1412 is within a projection of the main portion 1436 on the first surface of the substrate along the axial direction of the electric pump. When the electric pump 100 is in operation, the control board assembly 14 controls a current in the winding of the stator assembly 13 to vary in a preset pattern, so as to control the stator assembly 13 to generate a varying excitation magnetic field. Under the action of the excitation magnetic field, the second rotor assembly 12 is rotated so as to directly or indirectly drive the first rotor assembly 11 to rotate. When the first rotor assembly 11 is rotating, a volume of a hydraulic chamber in the first rotor assembly 11 varies, such that the working medium is pumped to an outlet passage, thereby generating power for circulation. The working medium can be accommodated in the first accommodation chamber 16 and the second accommodation chamber 17. When the working medium flows through the first accommodation chamber 16 and the second accommodation chamber 17, at least part of the electronic components 141 contact the working medium and exchange heat with the working medium inside the first accommodation chamber 16 and the second accommodation chamber 17. It is likely for the electronic component 141 to fail if being contacted with the working medium for a long time, which affects the service life of the control board assembly 14, and further affects the service life of the electric pump 100. With this solution, the working medium outside the electronic component is prevented from entering the electronic component, which protects the electronic component and is beneficial to avoiding failure of the electronic component, thereby improving the service life of the electric pump.

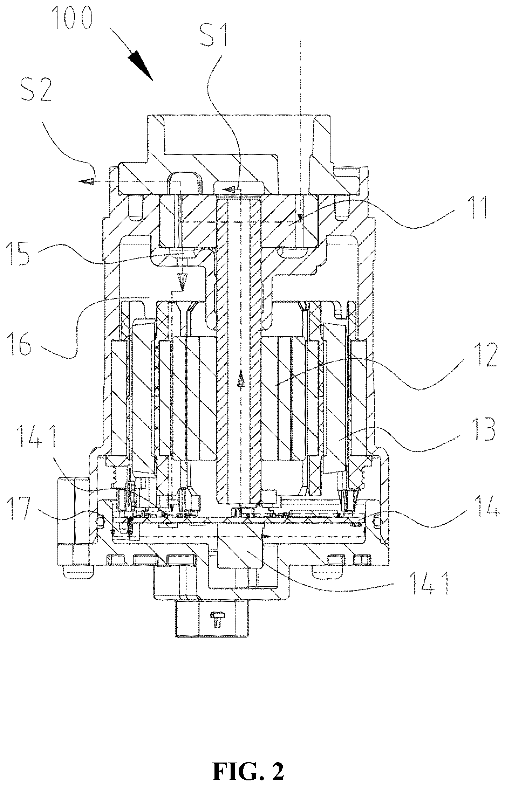

In an embodiment, referring to FIG. 1 and FIG. 2 again, the electric pump 100 further includes the third accommodation chamber 15, and the first rotor assembly 11 is located inside the third accommodation chamber 15. A wall surface of the third accommodation chamber 15 includes a bottom wall 151, and the bottom wall 151 is configured to support the first rotor assembly 11. The electric pump 100 further includes a first passage 152 running through an upper surface and a lower surface of the bottom wall 151, and the third accommodation chamber 15 is in communication with the first accommodation chamber 16. When the electric pump 100 is in operation, the working medium inside the third accommodation chamber 15 flows into the first accommodation chamber 16 through the first passage 152. The first accommodation chamber 16 and the second accommodation chamber 17 are in communication at least through the communication portion 22, and the working medium inside the first accommodation chamber 16 enters the second accommodation chamber 17 through the communication portion 22. As such, the electronic component 141 located inside the first passage 16, i.e. the first electronic component, can exchange heat with the working medium inside the first accommodation chamber 16. The electronic component 141 located inside the second passage 17, i.e. the second electronic component, can exchange heat with the working medium inside the second accommodation chamber 17. As such, a heat of the control board assembly 14 can be effectively dissipated, which increases the service life of the control board assembly 14, and further increases the service life of the electric pump 100. Referring to FIG. 1 again, the electric pump 100 further includes a pump shaft 18. One end of the pump shaft 18 is connected to the first rotor assembly 11, and the other end of the pump shaft 18 is connected to the second rotor assembly 12. The pump shaft 18 includes a second passage 181, and the second passage 181 runs through the pump shaft 18 along an axial direction of the pump shaft 18. One end of the second passage 181 is in communication with the third accommodation chamber 15, and the other end of the second passage 181 is in communication with the first accommodation chamber 16. When the electric pump 100 is in operation, a pressure of the working medium at an inlet of the first passage 152 is higher than a pressure of the working medium at an outlet of the second passage 181, and thus the working medium can leave the first accommodation chamber 16 through the second passage 181. A fluid flow path formed by the first passage 152 and the second passage 181 is defined as a first flow path S1, which is shown in FIG. 2.

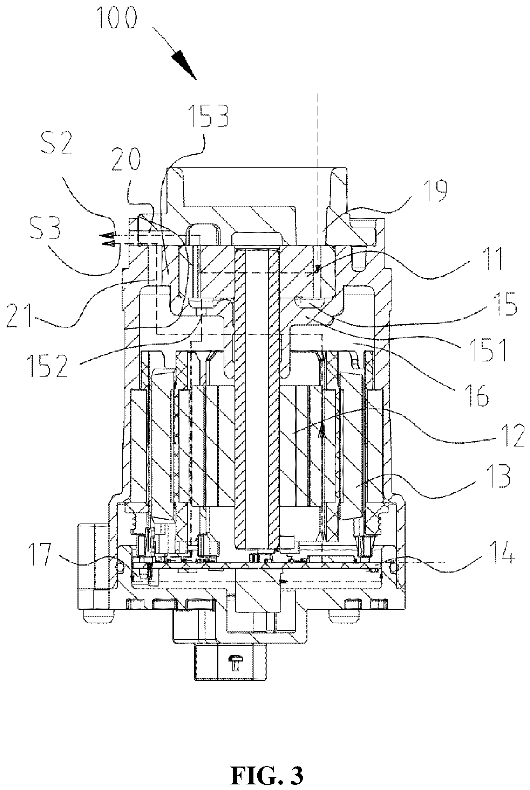

Referring to FIG. 2 and FIG. 3, the electric pump 100 further includes an inlet passage 19 and an outlet passage 20. The working medium from an exterior flows in through the inlet passage 19 and flows out through the outlet passage 20. The electric pump 100 further includes a third passage 21, and a wall portion of the third accommodation chamber 15 includes a side wall 153. The side wall 153 is located radially outside the bottom wall 151, and the third passage 21 runs through the side wall 153. One end of the third passage 21 is in communication with the first accommodation chamber 16, and the other end of the third passage 21 is in communication with the outlet passage 20. The pressure of the working medium at the inlet of the first passage 152 is higher than a pressure of the working medium at an outlet of the third passage 21, therefore the working medium inside the first accommodation chamber 16 can leave the first accommodation chamber 16 through the third passage 21. As such, the heat of the control board assembly 14 can be effectively dissipated. A fluid flow path formed by the inlet passage 19 and the outlet passage 20 is defined as a second flow path S2, and a fluid flow path formed by the first passage 152 and the third passage 21 is defined as a third flow path S3, which are shown in FIG. 3. To meet heat dissipation requirements of the control board assembly 14 in electric pumps with different power, the first flow path S1 and the third flow path S3 may be both provided for an electric pump 100 with high power, which is shown in FIG. 2 and FIG. 3.

Referring to FIG. 1, when the electric pump 100 is in operation, the working medium can enter the first accommodation chamber 16 through the first passage 152. The first accommodation chamber 16 and the second accommodation chamber 17 are in communication at least through the communication portion 22. Specifically, an even gap is provided between an outer side wall of the substrate 142 and an inner wall of the pump housing. Alternatively, gaps are provided at at least two positions that are symmetric with respect to an axis of the substrate 142 between the outer side wall of the substrate 142 and the inner wall of the pump housing along a circumferential direction, which is not limited herein. The communication portion 22 is a passage formed between the outer side wall of the substrate 142 and the inner wall of the pump housing. As such, an arrangement space, which is limited, on the substrate 142 can be saved, and the structure of the control board assembly 14 is simplified, thereby reducing the cost of the control board assembly 14, and further reducing the cost of the electric pump 100. Certainly, the communication portion 22 may be also provided on the substrate 142. The communication portion 22 includes a communication hole, which runs through the substrate 142, such that the first accommodation chamber 16 and the second accommodation chamber 17 are in communication. When the electric pump 100 is in operation, the working medium inside the first accommodation chamber 16 can enter the second accommodation chamber 17 through the communication hole. The electronic component 141 located inside the first accommodation chamber 16, i.e. the first electronic component, and/or the electronic component 141 located inside the second accommodation chamber 17, i.e. the second electronic component exchange heat with the working medium, thereby facilitating heat dissipation of the communication portion 14. As such, the structural size of the electric pump 100 is decreased without changing the size of the pump housing in a radial direction, which is beneficial to miniaturization of the structure of the electric pump 100.

A sealing portion of the control board assembly 14 arranged outside the matching portion is defined as a first sealing portion. The control board assembly is provided with a second sealing portion at the matching portion, so as to prevent the working medium from entering the portion where the first end portion of the electronic component is located. The first sealing portion and the second sealing portion may be made of a same material or different materials. For example, the first sealing portion and/or the second sealing portion are formed by solidifying a first sealing material being solidified, or the first sealing portion and/or the second sealing portion are formed by solidifying a second sealing material. In the following embodiments, the first sealing material and the second sealing material both include a first sealant. Certainly, in other embodiments, the first sealing material and/or the second sealing material include a second sealant. As described hereinabove, referring to FIG. 1 to FIG. 5, when the electric pump 100 is in operation, the electronic component 141 located inside the first accommodation chamber 16, i.e. the first electronic component, and the electronic component 141 located inside the second accommodation chamber 17, i.e. the second electronic component, contact the working medium for a long time. It is likely for the electronic components to fail if being contacted with the working medium for a long time. The electronic component 141 includes a resistor, a capacitor, an inductor, a processor and the like. The capacitor includes an electrolyte capacitor, a hybrid capacitor or a solid capacitor. The electrolyte capacitor is described as an example hereinafter. It should be noted that, the electrolyte capacitor may be at the same side as the first surface 1421 or may be at the same side as the second surface 1422. That is to say, an upper surface of the substrate referred to hereinafter may refer to the first surface 1421 or the second surface 1422.

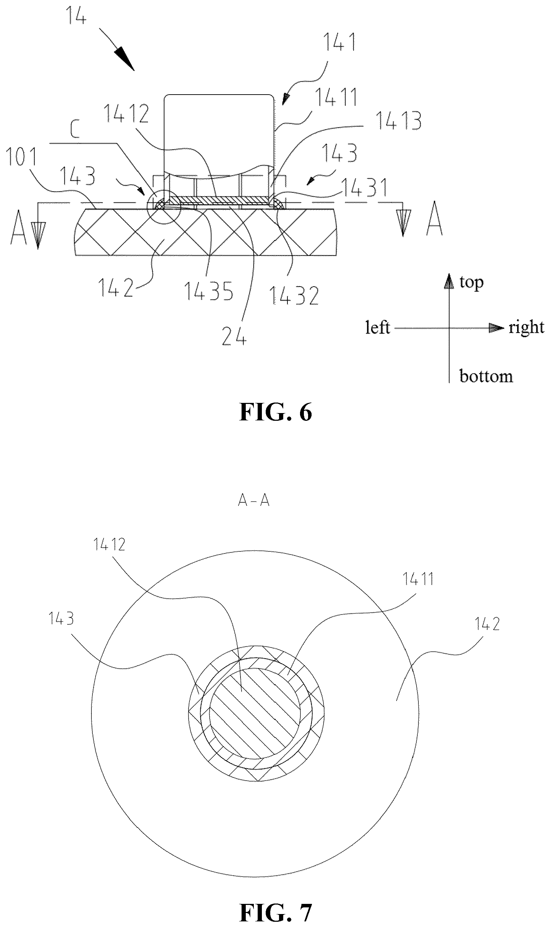

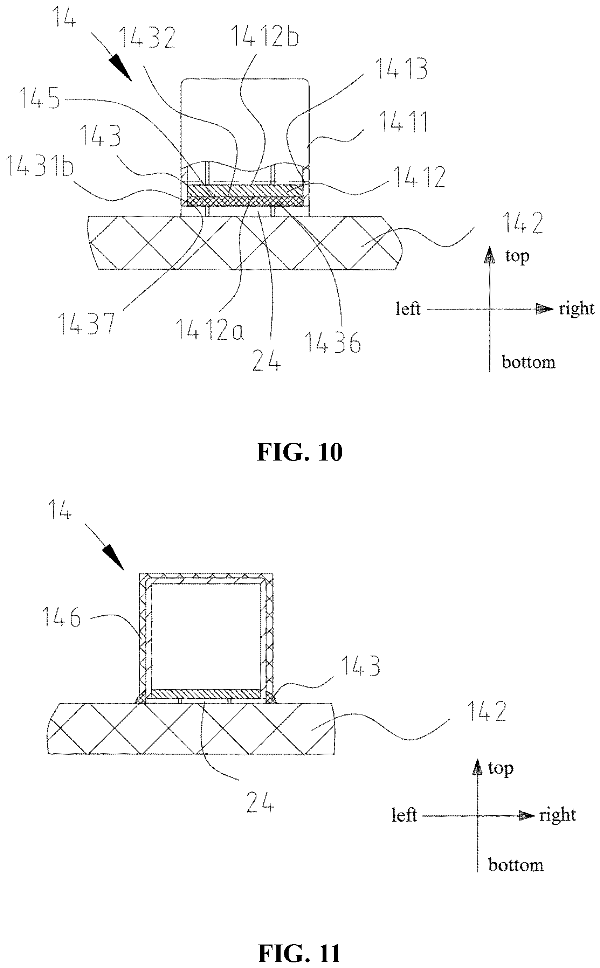

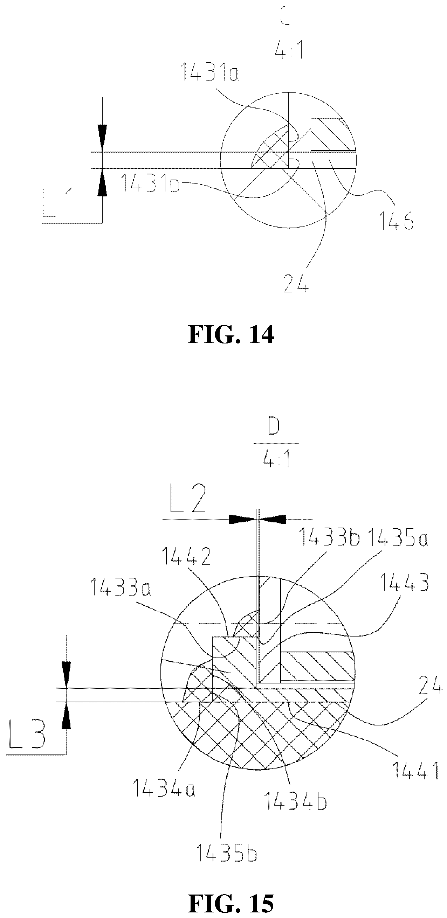

In an embodiment, referring to FIG. 6, FIG. 14 and FIG. 7, the sealing portion 143 includes a bottom portion 1432 and a side portion 1431. The first end portion 1413 includes an end of the housing close to the substrate 142, and the matching portion 24 includes a portion where the substrate 142 matches with the housing 1411. The blocking surface 1435 is located at the side portion 1431, and at least a part of the side portion 1431 is sealedly connected to an outer side wall of the first end portion 1413. Specifically, at least a part of the side portion 1431 is sealedly connected to an outer side wall of the first end portion 1413 along a whole circumference. That is, the side portion 1431 is connected to an outer side of the outer side wall surface of the first end portion 1413 in an oil-resistant sealing manner. The bottom portion 1432 is sealedly connected to the substrate 142. That is, the bottom portion 1432 is connected to the surface of the substrate 142 in an oil-resistant sealing manner. Specifically, the side portion 1431 includes a first segment 1431a and a second segment 1431b. The first segment 1431a is sealedly connected to the first end portion 1413, i.e. an outer side wall of the housing along a whole circumference. The blocking surface 1435 is located at the second segment 1431a, and the bottom portion 1432 is sealedly connected to the substrate 142. A side wall of the seal chamber 146 at least includes the inner wall surface of the housing 1411, the blocking surface 1435 and at least a part of the surface of the substrate 142, i.e., the upper surface of the substrate 142 as referring to FIG. 6. The seal chamber 146 is formed by the upper surface of the substrate 142, the sealing portion 143 and the housing of the electronic component 141, which prevents the working medium from entering the electronic component as much as possible. As such, less first sealing material is required. Specifically, the first sealing material may be the first sealant, and less first sealant is required, thereby saving the usage amount of the first sealant, and further reducing the cost of the control board assembly 14. The electronic component further includes the sealing pad 1412. The sealing pad 1412 is located inside the seal chamber, and is sealedly connected to an open end port along a whole circumference. The sealing pad 1412 is configured to seal the electrolyte inside the electrolyte capacitor. When the electronic component 141 is fixedly connected to the substrate 142, a first gap L1 (shown in FIG. 14) is formed between the upper surface of the substrate 142 and an end portion surface of the electronic component 141, i.e. an end portion surface of the first end portion. A height of the electronic component 141 is defined as H. It may be appreciated that, the height of the electronic component herein refers to a height along the axial direction of the electric pump. Along a height direction of the electronic component, which is parallel to the axial direction of the electric pump herein, a thickness between the upper surface and the lower surface of the sealing portion 143 is larger than a size of the first gap, and is smaller than or equal to 0.25H. If the working medium outside contacts the rubber pad, i.e. the sealing pad 1412 for a long time, the sealing pad 1412 swells and deforms, which can jack up the electrolyte capacitor, causing the electrolyte capacitor fall off and fail. The sealing material includes the first sealant. A viscosity parameter of the first sealant at the room temperature is higher than or equal to 20000 mPa.s. The first sealant is of a jelly form before being solidified. It should be noted that, the room temperature herein and hereinafter is 25°C ±3°C. At a position where the first sealant is applied, the first sealant cannot flow freely until being solidified. The solidified first sealant, i.e. the sealing portion is well compatible with the oil, and can stay in an environment with working medium while keeping a good sealing performance. Specifically, the first sealant may be applied by spreading but is not limited thereto, and may be applied by other means, which is not limited herein. In an embodiment, specifically, the first sealant may be applied by spraying, coating or smearing, which is not limited herein. In the present embodiment, the first sealant is solidified by UV light at the room temperature, or solidified at high temperature, or solidified by other means, which is not limited herein. After solidification, the seal chamber is formed by the inner wall surface of the housing 1411, at least a part of the side portion 1431 and at least a part of the upper surface of the substrate 142. The sealing pad of the electrolyte capacitor is arranged inside the seal chamber to effectively prevent the corrosive working medium, such as gear oil, from entering the electronic component 141, such as the electrolyte capacitor, through a gap between the electronic component 141 and the substrate 142, and contacting the sealing pad of the electrolyte capacitor. Therefore, the service life of the sealing pad is improved, and the service life of the electric pump is further improved. As such, firstly, the seal chamber formed by the sealing portion 143, the substrate 142 and the housing 1411 can effectively protect the sealing pad, which increases the service life of the sealing pad, is beneficial to protection of the electronic component and reduces the risk of failure of the electronic component, thereby increasing the service life of the electronic component. Secondly, the processing method of the sealing portion 143 is simple, which is beneficial to volume production, and effectively increases production efficiency of the control board assembly 14. Thirdly, the sealing portion 143 is arranged outside the electronic component 141. When applying the sealing portion 143, a blocking process to the gap between the electronic component 141 and the substrate 142 by the sealing portion 143 can be directly seen, which facilitates control of appearance quality of the sealing portion 143, thereby achieving a sealing performance with high quality. Fourthly, the sealing portion 143 is provided at an outer circumferential side of the electronic component 141, and occupies little space on the substrate 142, making space for other electronic components 141 as the arrangement space is limited, thereby reducing the size of the substrate 142 in the radial direction, saving the cost of the control board assembly 14, and facilitating of miniaturization of the electric pump. Fifthly, the thickness between the upper surface and the lower surface of the sealing portion 143 is larger than the size of the first gap L1, and is smaller than or equal to 0.25H, and thus the electronic component can exchange heat with the working medium more effectively while an effective seal to the electronic components can be achieved, which facilitates a sufficient heat dissipation of the electronic component 141, thereby increasing the service life of the electric pump. Further, in an embodiment, referring to FIG. 10, the control board assembly further includes a cover portion 145, and the cover portion 145 includes a body portion 1451 and a peripheral portion 1452. The peripheral portion 1452 is an outer circumferential wall surface of the body portion 1451, and the peripheral portion 1452 is sealedly connected to the inner wall surface of the first end portion 1413 along a whole circumference. The electronic component includes the sealing pad 1412, and the sealing pad 1412 is sealedly connected to the inner wall surface of the first end portion 1413 along the whole circumference. The sealing pad 1412 includes a front surface 1412a and a back surface 1412b. Along the axial direction of the electric pump, the front surface 1412a is positioned closer to the substrate 142 than the back surface 1412b is. The body portion 1451 contacts and covers the front surface 1412a. A projection area of the body portion 1451 is larger than or equal to a projection area of the front surface 1412a on a plane where the front surface 1412a is located. It should be noted that, the cover portion 145 mentioned herein and hereinafter is made of a third sealing material. The third sealing material may be the same as the first sealing material and the second sealing material. The third sealing material includes the second sealant, and the cover portion 145 is formed by solidifying the second sealant. At the room temperature, a viscosity parameter of the second sealant is higher than or equal to 200 mPa.s. When the cover portion 145 is solidified and shaped, the inner wall surface of the housing 1411 serves as an enclosing fence to enclose a liquid UV resin or UV adhesive inside the housing 1411. The liquid UV resin or UV adhesive has a good fluidity, which can sufficiently flow into a gap between the sealing pad and the inner wall of the housing. As the inner wall surface of the housing 1411 serves as the enclosing fence, a cover portion 145 having a certain thickness is formed by UV solidification or high-temperature solidification. As such, the second sealant has a good fluidity and can sufficiently flow into the gap between the sealing pad and the housing, thereby further protecting the electronic component and effectively reducing the corrosion of the electronic component generated by the working medium, such as the corrosion of the sealing pad of the electronic component, so as to effectively decrease the risk of failure of the electronic component.

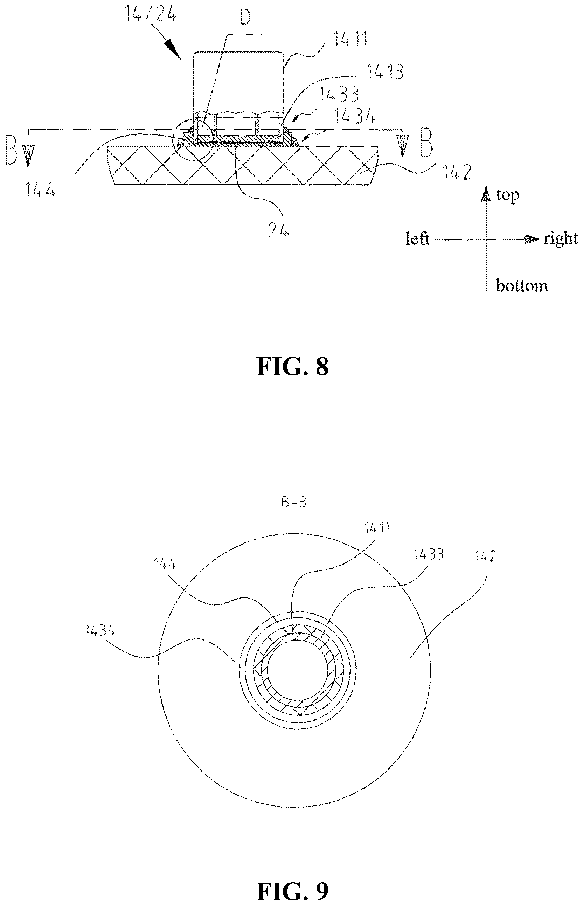

In an embodiment, referring to FIG. 8, FIG. 9 and FIG. 15, the electronic component 141 includes an electrolyte capacitor. Generally, to match with electric pumps 100 with different power, an electric pump 100 with high power is usually provided with an electrolyte capacitor with a large size. To enhance a connection strength between the electrolyte capacitor and the substrate 142, the electronic component 141 further includes a base 144. The base 144 is provided with a positioning hole 1443 extending along a thickness direction of the base 144, and the first end portion 1413 is located in the positioning hole 1443. The base 144 includes a first surface 1441 and a second surface 1442. Along the axial direction of the electric pump, the second surface 1442 is farther away from the substrate 142 than the first surface 1441. The base 144 is fixedly connected to the substrate. The first end portion 1413 includes an end of the base 144 close to the substrate and the end of the housing 1411 close to the substrate. The matching portion 24 includes a portion where the base and the substrate match with each other, and the matching portion includes a portion where the housing and the substrate match with each other. An outer side wall of the electronic component 141 is positioned-limitedly connected with a wall that forms the positioning hole, where "being positioned-limitedly connected" may be a connection by clearance fit, by transition fit, or by interference fit, which is not limited herein. In this embodiment, an outer side wall of the electronic component 141 is in clearance fit with the wall surface that forms the positioning hole. The electronic component 141 is fixedly connected to the substrate 142 through the base 144. A projection area of the electronic component 141 is smaller than a projection area of the base 144 on an upper surface of the base 144. It should be noted that, the upper surface of the base 144 refers to the second surface 1442. As such, a contact area between the base 144 and the substrate 142 is larger than a contact area between the end portion of the electronic component 141 and the substrate 142. The providing of the base 144 is beneficial to the connection strength between the electrolyte capacitor and the substrate 142. As such, a second gap is formed between the outer wall of the electronic component 141 and the side wall of the positioning hole 1443, and a third gap is formed between the upper surface of the substrate 142 and a lower surface of the base 144, i.e. the first surface 1441. In an embodiment, referring to FIG. 8 and FIG. 15, in order to block the second gap and the third gap and prevent the working medium from entering the electronic component 141, such as the electrolyte capacitor, through the second gap and the third gap, and corroding the sealing pad of the electrolyte capacitor, the sealing portion 143 includes a first portion 1433 and a second portion 1434. The first portion 1433 includes a first contact portion 1433a and a second contact portion 1433b, and the second portion 1434 includes a second joint portion 1434b and a first joint portion 1434a. The second contact portion 1433b is sealedly connected to the outer side wall of the first end portion 1413a along the whole circumference. Specifically, the second contact portion 1433b is oil-sealedly connected to an outer circumferential side of the outer wall surface of the housing. The first contact portion 1433a is sealedly connected to the second portion 1442. Specifically, the first contact portion 1433a is oil-sealedly connected to the second surface 1442. At least a part of the second joint portion 1434b is sealedly connected to a circumferential side wall of the base 144 along a whole circumference. The first joint portion 1434a is sealedly connected to the surface of the substrate 142. Specifically, the first joint portion 1434a is oil-sealedly connected to the surface of the substrate 142. The blocking surface 1435 includes a first blocking surface 1435a and a second blocking surface 1435b. The first blocking surface 1435a is located at the first contact portion 1433a, and the second blocking surface is located at the second joint portion 1434b. The wall surface of the seal chamber 146 includes the inner wall surface of the housing 1411, the first blocking surface 1435a, at least a part of the first surface 1442, the second blocking surface 1435b and at least a part of the surface of the substrate 142. Along the axial direction of the electric pump, a thickness of the first portion 1433 is less than or equal to 0.25H, and a thickness of the second portion 1434 is less than or equal to a thickness of the base 144. As such, the second gap and the third gap can be effectively blocked, such that the working medium is prevented from entering the electronic component 141, such as the electrolyte capacitor, and corroding the sealing pad of the electrolyte capacitor. The above sealing portion 143 may be the first sealant being solidified by UV solidification or high-temperature solidification. The viscosity parameter of the first sealant is higher than or equal to 20000 mPa.s. As such, firstly, less first sealant is required, and thus the amount of the first sealant is saved, thereby reducing the cost of the control board assembly 14. Secondly, due to the arrangement of the first portion 1433 and the second portion 1434, a contact area between the sealing portion 143 and both the electronic component 141 and the substrate 142 is relatively small. Therefore, the electronic component 141 can exchange heat with the working medium more sufficiently while ensuring the sealing performance, which facilitates a sufficient heat dissipation of the electronic component 141, and improves the service life of the control board assembly 14. In an embodiment, the first portion 1433 and the second portion 1434 may be fixedly connected. Further, referring to FIG. 8, FIG. 15, FIG. 9 and FIG. 13, the control board assembly 14 further includes a cover portion 145, and the cover portion 145 includes a body portion 1451. A peripheral portion 1452 is an outer circumferential wall surface of the body portion 1451, and the peripheral portion 1452 is sealedly connected to the inner wall surface of the first end portion 1413 along a whole circumference. The electronic component includes the sealing pad 1412, and the sealing pad 1412 is sealedly connected to the inner wall surface of the first end portion 1413 along the whole circumference. The sealing pad 1412 includes a front surface 1412a and a back surface 1412b. Along the axial direction of the electric pump, the front surface 1412a is positioned closer to the substrate 142 than the back surface 1412b is. The body portion 1451 contacts and covers the front surface 1412a. A projection area of the body portion 1451 is larger than or equal to a projection area of the front surface on a plane where the front surface 1412a is located. The cover portion 145 is formed by a solidifying of the second sealant. At the room temperature, the viscosity parameter of the second sealant is higher than or equal to 200 mPa.s. When the cover portion 145 is solidified and shaped, the inner wall surface of the housing 1411 serves as an enclosing fence to enclose a liquid UV resin or UV adhesive inside the housing 1411. Since the liquid UV resin or UV adhesive has a good fluidity, it can sufficiently flow into a gap between the sealing pad and the inner wall of the housing. As the inner wall surface of the housing 1411 serves as the enclosing fence, the cover portion having a certain thickness is formed by UV solidification or high-temperature solidification. As such, the second sealant has a good fluidity and can sufficiently flow into the gap between the sealing pad and the housing, thereby further protecting the electronic component and effectively reducing the corrosion of the electronic component generated by the working medium, such as the corrosion of the sealing pad of the electronic component, to effectively decrease the risk of failure of the electronic component.

Another embodiment is described hereinafter. Referring to FIG. 10, the electronic component includes the sealing pad 1412, and the sealing pad 1412 is sealedly connected to the inner wall surface of the first end portion along the whole circumference. The sealing pad 1412 includes a front surface 1412a and a back surface 1412b. Along the axial direction of the electric pump, the front surface 1412a is positioned closer to the substrate 142 than the back surface 1412b is. The sealing portion 143 includes a main portion 1436 and an outer side portion 1437. The outer side portion 1437 is a circumferential wall surface of the main portion 1436. The outer side portion 1437 is sealedly connected to the inner wall surface of the first end portion 1413 along a whole circumference. The body portion 1436 contacts and covers the front surface 1412a. A projection area of the body portion 1436 is larger than or equal to a projection area of the front surface 1412a on a plane where the front surface 1412a is located. The body portion 1436 includes an inner side surface and an outer side surface, and the outer side surface is positioned closer to the substrate 142 than the inner side surface is. The blocking surface 1435 is located at the inner side surface, and the wall surface of the seal chamber includes the inner wall surface of the housing and the blocking surface 1435. It should be noted that, the sealing portion herein may be formed by solidifying the first sealing material, or the second sealing material, or the third sealing material. The sealant may be the first sealant, or may be the second sealant. At the room temperature, the viscosity parameter of the second sealant is higher than or equal to 200 mPa.s. At the room temperature, the viscosity parameter of the second sealant is less than or equal to the viscosity parameter of the first sealant. In the present embodiment, the sealant is the second sealant. The second sealant has a good fluidity, and can sufficiently flow into the gap between the sealing pad and the housing. After solidified, the second sealant forms the sealing portion to isolate the sealing pad from the working medium, thereby effectively preventing the working medium from entering the electronic component from outside, to effectively protect the sealing portion 1412 inside the electronic component. Moreover, a dual protection provided by the sealing portion and the sealing pad can effectively prevent the working medium from entering the electronic component from outside, thereby increasing the service life of the electronic component, and further increasing the service life of the electric pump. The second sealant may be a UV resin or a UV adhesive. The UV resin or the UV adhesive is solidified by UV solidification or high-temperature solidification. In the present embodiment, the UV adhesive is sprayed onto the surface of the sealing pad 1412 to form the sealing portion 143, and the sealing pad 1412 is completely covered by the sealing portion 143. When the sealing portion 143 is solidified and shaped, the inner wall surface of the housing 1411 serves as an enclosing fence to enclose a liquid UV resin or UV adhesive inside the housing 1411. The liquid UV resin or UV adhesive has a good fluidity, which can sufficiently flow into a gap between the sealing pad and the inner wall of the housing. As the inner wall surface of the housing 1411 serves as the enclosing fence, the sealing portion having a certain thickness is formed by UV solidification or high-temperature solidification. As such, when the electrolyte capacitor is in the working medium, the sealing pad 1412 is effectively prevented from directly contacting the working medium for a long time, and thus the electrolyte capacitor is effectively prevented from failing due to the deformation of the sealing pad 1412 as contacting the working medium for a long time. The sealing portion 143 is arranged inside the electrolyte capacitor, and thus the arrangement space on the surface of the substrate 142 can be effectively saved, which provides a basis for miniaturization design of the electric pump 100.

In another embodiment, referring to FIG. 11, based on providing the sealing portion 143, a surface of the electronic component 141 may be further treated. Specifically, a protection film 146 is covered on the surface of the electronic component. The protection film 146 may be a three-proof paint, or may be the second sealant, where the viscosity parameter of the second sealant at the room temperature is higher than or equal to 200 mPa.s. In the present embodiment, the protection film is the three-proof paint, which is evenly sprayed on the surface of the electronic component. The three-proof paint has a good fluidity, which can cover the surface of the electronic component well, and a thin layer of the protection film 146 is covered on the surface of the electronic component. Therefore, by a combination of the sealing portion 143 and the three-proof paint, the electrolyte capacitor can be more effectively protected. The housing of the electrolyte capacitor is prevented from being corroded by the corrosive working medium without affecting the heat dissipation of the electronic component, thereby increasing the service life of the electronic component, and further increasing the service life of the control board assembly 14.

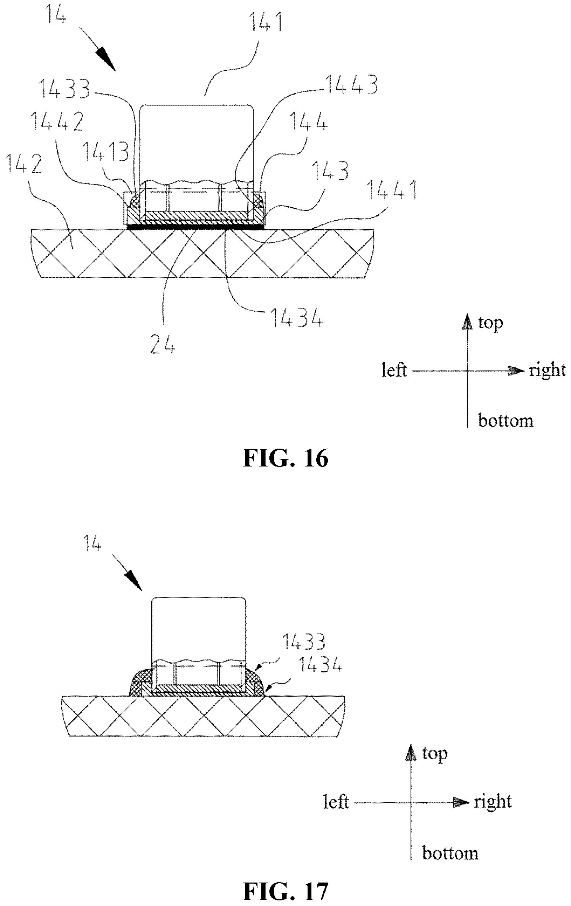

In an embodiment, referring to FIG. 16, the electronic component 141 includes a base 144 and a housing 1411. The base 144 includes a positioning hole 1443 extending along a thickness direction of the base 144. At least a part of the base 144 is located inside the positioning hole 1443, and the base 144 is fixedly connected to the substrate 142. The base 144 includes a first surface 1441 and a second surface 1442. Along the axial direction of the electric pump, the second surface 1442 is farther away from the substrate 142 than the first surface 1441. A first end portion 1413 is one end of an assembly formed by a combination of the base 144 and the housing 1411, and an end face of the first end portion 1413 is the first surface 1441. A matching portion 24 is a portion where the base 144 matches with the substrate 142. The sealing portion 143 includes a first portion 1433 and a second portion 1434, and the first portion 1433 includes a first contact portion 1433a and a second contact portion 1433b. The second contact portion 1433a is oil-sealedly connected to an outer circumferential side an outer wall surface of the housing 1411, and the first contact portion 1433a is oil-sealedly connected to the second surface 1441. The second portion 1434 is oil-sealedly connected to the first surface 1441 and is oil-sealedly connected to the end face of the first end portion 1413. As such, the electronic component may be effectively oil-sealed while enhancing the stability of the electronic component, so as to prevent the working medium from entering the portion where the first end portion 1413 of the electronic component is located.

In an embodiment, referring to FIG. 17, the first portion 1433 and the second portion 1434 are connected. As such, the structure of the sealing portion is more stable. In the corrosive working medium, with a one-piece structure, the sealing portion 143 can have a good oil-resistant sealing performance for a long time.

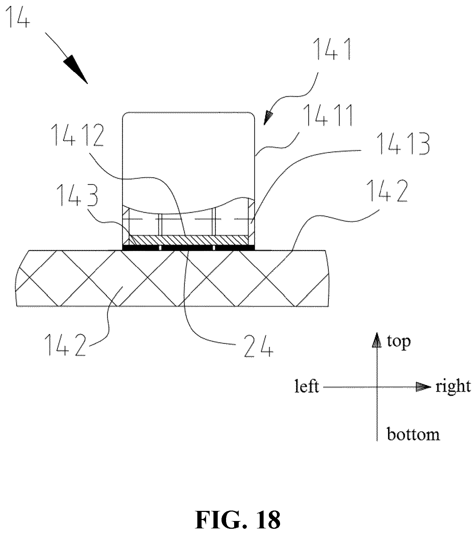

In an embodiment, referring to FIG. 18, the electronic component 141 includes the housing 1411. The first end portion 1413 is located at one end of the housing 1411, and the matching portion 24 is the portion where the substrate 142 and the housing 1411 match with each other. The sealing portion 143 is oil-sealedly connected to the surface of the substrate 142 and is oil-sealedly connected to the end face of the first end portion 1413.

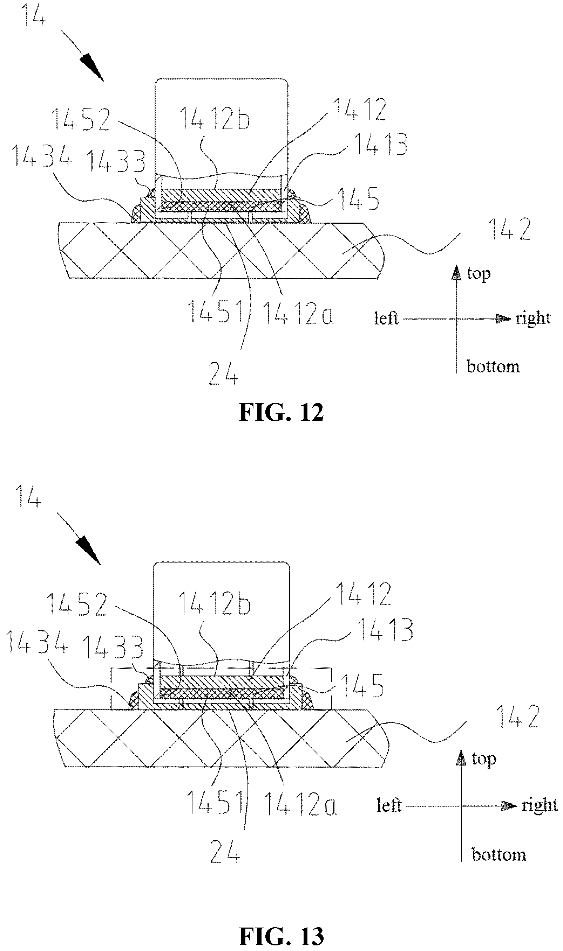

Based on the above embodiments as shown in FIG. 16, FIG. 17 and FIG. 18, the electronic component may be further provided with a cover portion, the reference of which is made to the embodiments shown in FIG. 12 and FIG. 13, which is not described in detail herein.

Referring to FIG. 1 to FIG. 18, a manufacturing method for the electric pump is further provided according to the present application, which includes: apply a sealing material at least to the outer wall surface of the first end portion 1413 and the surface of the substrate 142. It should be noted that, the "applying" herein and hereinafter specifically includes but is not limited to "spread", and the spreading method includes but is not limited to spraying, coating or smearing, which is not limited herein.

The method further includes the following steps: solidify the sealing material to form the sealing portion 143, where the sealing portion 143 includes a blocking surface 1435; and obtain the control board assembly 14, where the control board assembly 14 includes the seal chamber, and the wall surface of the seal chamber 146 at least includes the blocking surface 1435, a part of the surface of the substrate, and the inner wall surface of a housing 1411. Alternatively, apply the sealing material to the surface of the sealing pad 1412 of the electronic component 141, and completely cover the sealing material the surface of the sealing pad 1412.

Form the sealing portion 143 by solidification, where the sealing portion 143 includes a main portion 1436 and an outer side portion 1437, and the outer side portion 1437 is an outer circumferential wall surface of the main portion 1436. The outer side portion 1437 is sealedly connected to an inner wall surface of the first end portion 1413 along a whole circumference, and the main portion 1436 covers the surface of the sealing pad 1412. It should be noted that, the main portion 1436 covering the sealing pad 1412 may contact or not contact the sealing pad 1412, as long as that, along the axial direction of the electric pump, a projection of the sealing pad is within a projection of the main portion 1436 on the first surface of the substrate. As such, firstly, the working medium outside the electronic component may be effectively prevented from entering into the electronic component, which protects the electronic component, thereby improving the service life of the electric pump. Secondly, the manufacturing processing of sealing portion is simple, which is beneficial to volume production.

Specifically, referring to FIG. 1 to FIG. 18 again, in an embodiment, another manufacturing method for the electric pump 100 is provided. The method includes the following steps.

Before the first sealant is applied, a first gap L1 is formed between the first end portion 1413 and the second surface 1422 of the substrate 142.

The first sealant is applied along a whole circumference of the outer side wall of the first end portion 1413 of the electronic component 141. At least a part of the first sealant contacts the outer side wall of the first end portion 1413 along the whole circumference, and at least a part of the first sealant contacts the second surface 1422 of the substrate 142, and extends outwards along a radial direction of the first end portion on the upper surface of the substrate 142. Along the axial direction of the electronic component, an extension height of the sealing material is greater than a size of the first gap L1. It should be noted that, a bottom portion of the sealing portion 143 is taken as a first reference surface. Along the axial direction of the electronic component, the upper surface of the sealing portion is provided with a first point, and a distance between the first point and the first reference surface is less than or equal to distances between any other points on the upper surface of the sealing portion except for the first point. A second reference surface is provided, and the second reference surface passes through the first point and is parallel to the first reference surface. A distance between the first reference surface and the second reference surface is taken as the extension height.

The sealing portion 143 is formed by solidification. The sealing portion 143 includes the bottom portion 1432 and the side portion 1431. A wall surface sealedly connected to the outer side wall of the first end portion 1413 is the side portion 1431, and a wall surface sealedly connected to the upper surface of the substrate 142 is the bottom portion 1432. The wall surface of the seal chamber 146 at least includes the inner wall surface of the housing of the electronic component 141, the blocking surface 1435 and at least a part of the surface of the substrate 142. As such, firstly, less amount of the first sealant is needed, which saves the usage amount of the first sealant, thereby reducing the cost of the control board assembly. Secondly, the seal chamber formed at least by the sealing portion 142, the substrate 142 and the housing 1411 can effectively protect the sealing pad 1412, which increases the service life of the sealing pad 1412, is beneficial to protection of the electronic component 141 and reduces the risk of failure of the electronic component 141, thereby increasing the service life of the electronic component.

Further, the sealing material includes the second sealant. The electronic component 141 includes the sealing pad 1412, and the sealing pad 1412 is sealedly connected to the inner side wall of the first end portion 1413 along a whole circumference. The second sealant is applied to the front surface of the sealing pad 1412 and the inner wall surface of the first end portion 1413, such that the first sealant completely covers the front face, and is solidified to form the cover portion 145. The cover portion 145 includes a body portion 1451. A peripheral portion of the body portion 1451 is sealedly connected to the inner wall surface of the first end portion 1413 along a whole circumference. The electronic component 141 includes the sealing pad 1412, and the sealing pad 1412 is sealedly connected to the inner wall surface of the first end portion 1413 along the whole circumference. The sealing pad 1413 includes a front surface 1412a and a back surface 1412b. Along the axial direction of the electric pump, the front surface 1412a is positioned closer to the substrate 142 than the back surface 1412b is. The body portion 1451 contacts and covers the front surface 1412a. A projection area of the body portion 1451 is larger than or equal to a projection area of the front surface 1412a on a plane where the front surface is. As such, the sealing pad is dual-protected, which prevents the working medium from corroding the sealing pad.

In an embodiment, referring to FIG. 1 to FIG. 18, a third manufacturing method for the electric pump 100 is provided, which includes:
The sealing material includes the first sealant. The control board assembly 14 includes a base 144, and the base 144 includes a positioning hole extending along the thickness direction of the substrate 142. The first end portion 1413 is position-limitedly connected to the positioning hole. The base 144 is fixedly connected to the substrate 142. A second gap is formed between the first end portion 1413 and the positioning hole, and a third gap is formed between the first surface of the base 144 and the second surface of the substrate 142. The method includes the following steps:
apply the first sealant to the second gap L2, such that the first sealant completely covers the second gap L2;
apply the first sealant to the third gap L3, such that the first sealant completely covers the third gap L3;
solidify the first sealant to form the sealing portion 143. The sealing portion 143 includes the first portion 1433 and the second portion 1434. The first portion 1433 includes a first contact portion and a second contact portion, and the second portion includes a first joint portion and a second joint portion. The blocking surface 1435 includes a first blocking surface 1435 and a second blocking surface 1435. The first blocking surface 1435 is located at the first contact portion, and the second blocking surface 1435 is located at the second joint portion. The wall surface of the seal chamber includes the inner wall surface of the housing, the first blocking surface 1435, at least a part of the first surface, the second blocking surface 1435 and at least a part of the surface of the substrate. As such, it is beneficial to reducing the corrosion of the electronic component resulted by the working medium while the connection strength between the electronic component and the substrate is enhanced. Further, the sealing material further includes the second sealant. The electronic component includes the sealing pad, and the sealing pad is sealedly connected to the inner side wall of the first end portion along a whole circumference. The second sealant is applied to the front surface of the sealing pad and the inner wall surface of the first end portion, such that the first sealant completely covers the front face, and is solidified to form the cover portion. As such, the sealing pad is dual-protected, which prevents the working medium from corroding the sealing pad.

A fourth manufacturing method for the electric pump is further provided according to the present application, which includes the following steps: the electronic component 141 further includes the sealing pad 1412, and the sealing pad 1412 is sealedly connected to the inner side wall of the first end portion 1413 along the whole circumference,
apply the second sealant to the front surface 1412a of the sealing pad 1413 and the inner wall surface of the first end portion 1413, such that the first sealant covers the front surface 1412a,
solidify the second sealant to form the sealing portion. The sealing portion 143 includes a main portion 1436, and the blocking surface 1435 is located on the inner side surface. The wall surface of the seal chamber includes the inner wall surface of the housing 1411 and the blocking surface 1435. Specifically, before the electronic component 141 is welded to the substrate, the second sealant is applied to the inner wall surface of the first end portion and the front surface of the sealing pad. The second sealant is solidified to form the sealing portion. As such, compared with a solution that the second sealant is applied after the electronic component and the substrate are welded, in the present embodiment, it can effectively prevent the second sealant from flowing to other positions on the substrate and causing waste of the second sealant. That is to say, according to the present embodiment, the cost of the control board assembly is reduced, thereby reducing the cost of the electric pump.

Referring to FIG. 1 to FIG. 18, another manufacturing method for the electric pump is further provided, which includes the following steps:
apply the first sealing material to the outer side of the matching portion 24 along a circumferential direction;
solidify the first sealing material, such that the first sealing material is oil-sealedly connected to the surface of the substrate 142, and the first sealing material is oil-sealedly connected to the outer circumferential side of the outer wall surface of the first end portion 1413 ;
assemble the control board assembly 14 with the stator assembly 13. An assembly formed by the control board assembly 14 and the stator assembly 13 is located inside the accommodation chamber of the electric pump 100. Alternatively, the stator assembly 13 is located inside the accommodation chamber of the electric pump 100, the control board assembly 14 is assembled into the accommodation chamber of the electric pump 100, and the control board assembly 14 and the stator assembly 13 are electrically connected; and
assemble the first rotor assembly 11 into the accommodation chamber of the electric pump 100, and a portion where the first rotor assembly 11 is located is in communication with a portion where the control board assembly 14 is located. As such, firstly, less amount of the first sealing material is needed, and thus the usage amount of the first sealing material is saved, thereby reducing the cost of the control board assembly. Moreover, it can effectively protect the sealing pad 1412, which increases the service life of the sealing pad 1412, is beneficial to protection of the electronic component 141 and reduces the risk of failure of the electronic component 141, thereby increasing the service life of the electronic component.

Another manufacturing method for the electric pump is further provided according to the present application. Referring to FIG. 1 to FIG. 18, the method includes the following steps:
apply the second sealing material inside the matching portion 24;
solidify the second sealing material, such that the second sealing material is oil-sealedly connected to the surface of the substrate 142, and the second sealing material is oil-sealedly connected to the end face of the first end portion 1413 ;
assemble the control board assembly 14 and the stator assembly 13, an assembly formed by the control board assembly 14 and the stator assembly 13 is located inside the accommodation chamber of the electric pump 100. Alternatively, the stator assembly 13 is located inside the accommodation chamber of the electric pump 100, the control board assembly 14 is assembled into the accommodation chamber of the electric pump 100, and the control board assembly 14 and the stator assembly 13 are electrically connected; and
assemble the first rotor assembly 11 into the accommodation chamber of the electric pump 100, and a portion where the first rotor assembly 11 is located is in communication with a portion where the control board assembly 14 is located. As such, the working medium is prevented from entering the electronic component 141. Moreover, the first sealing material occupies less area on the substrate 142, which is beneficial to the miniaturization design of the control board assembly 14. Further, based on the above two manufacturing methods, another manufacturing method for the electric pump is further provided according to the present application. As shown in FIG. 1 to FIG. 18, the second sealant is applied to an inner circumferential side of the inner wall surface of the housing 1411 of the electronic component 141, which is located at the same side as the pin of the electronic component 141. The second sealant is solidified, such that the second sealing material seals the end face of the electric pump 141 in an oil-resistant manner. As such, the protection of the electronic component 141 is enhanced.

An electric pump is further provided according to the present application. Referring to FIG. 1 to FIG. 18, the manufacturing method includes the following steps:
assemble the electronic component, which includes: the sealing pad is arranged in a region inside the inner circumferential side of the housing of the electronic component, such that the sealing pad is oil-sealedly connected to the inner circumferential side of the housing ; and
assemble the electronic component and the substrate.

Another manufacturing method is further provided according to the present application. Referring to FIG. 1 to FIG. 18, the manufacturing method includes the following steps: apply the second sealing material to a region between the housing 1411 and the substrate 142, and/or the second sealing material is applied to a region between the sealing pad 1412 and the substrate 142.

Another manufacturing method for the electric pump is further provided according to the present application. Referring to FIG. 1 to FIG. 18, the manufacturing method includes a step that, the second sealing material is applied to the region between the housing 1411 and the substrate 142.

Another manufacturing method for the electric pump is further provided according to the present application. Referring to FIG. 1 to FIG. 18, the manufacturing method includes the following steps:
assemble the electronic component, where in this step, the housing 1411 and the base 144 are assembled; and
apply the first sealing material to an outer side of a position where the base 144 and the housing 1411 are connected in a circumferential direction, and/or apply the second sealing material to a region between the base 144 and the substrate 142.

## Claims

1. An electric pump, comprising a stator assembly (13) and a control board assembly (14) that are electrically connected, wherein
the electric pump comprises an accommodation chamber, and the control board assembly (14) comprises a substrate (142) and electronic components (141), wherein the substrate (142) is located inside the accommodation chamber, and the electronic components (141) are located inside the accommodation chamber,
at least one of the electronic components (141) comprises a pin and a first end portion (1413) facing the substrate (142), the pin of the at least one of the electronic components (141) is electrically connected to the substrate (142), and the first end portion (1413) and the pin of the at least one of the electronic components (141) are arranged at a same side,
**characterised in that**
when the electric pump is in operation, a working medium is provided inside the accommodation chamber, and the electronic components (141) and the substrate (142) contact the working medium,
a portion where the substrate (142) matches with the at least one of the electronic components (141) is defined as a matching portion (24), and the control board assembly (14) is provided with a sealing portion (143) at the matching portion (24) or the control board assembly (14) is provided with a sealing portion (143) outside the matching portion (24) only at the first end portion (1413), to prevent the working medium from entering a portion where the first end portion (1413) of the at least one of the electronic components (141) is located, and the sealing portion (143) is oil-sealedly connected to a surface of the substrate (142).

2. The electric pump according to claim 1, wherein
each electronic component (141) comprises a housing (1411) and a sealing pad (1412), and the sealing pad (1412) is oil-sealedly connected to an inner circumferential side of the housing (1411),
the sealing pad (1412) comprises a front surface (1412a) and a back surface (1412b), and the front surface (1412a) is positioned closer to the substrate (142) than the back surface (1412b) is in an axial direction of the electric pump, and
the sealing pad (1412) covers an inner side region inside the inner circumferential side of the housing (1411), and the first end portion (1413) comprises the front surface (1412a) of the sealing pad (1412).

3. The electric pump according to claim 1 or claim 2, wherein
each electronic component comprises a housing (1411), and the first end portion (1413) comprises an end of the housing (1411) close to the substrate (142),
the matching portion (24) comprises a portion where the substrate (142) and the housing (1411) match with each other, and the sealing portion (143) comprises a bottom portion (1432) and a side portion (1431), and
the side portion (1431) is oil-sealedly connected to a circumferential side of an outer wall surface of the first end portion (1413), and the bottom portion (1432) is oil-sealedly connected to the surface of the substrate (142).

4. The electric pump according to claim 1 or claim 2, wherein
each electronic component (141) comprises a base (144) and a housing (1411);
the base (144) is fixedly connected to the housing (1411), and the base (144) is fixedly connected to the substrate (142),
the base (144) comprises a first surface (1441) and a second surface (1442), and the second surface (1442) is positioned farther away from the substrate (142) than the first surface (1441) in an axial direction of the electric pump,
the first end portion (1413) comprises an end of the base (144) close to the substrate (142) and an end of the housing (1411) close to the substrate (142),
the matching portion (24) comprises a portion where the base (144) and the substrate match with each other, and the matching portion (24) comprises a portion where the housing (1411) and the substrate (142) match with each other,
the sealing portion (143) comprises a first portion (1433) and a second portion (1434), the first portion (1433) comprises a first contact portion (1433a) and a second contact portion (1433b), and the second portion (1434) comprises a first joint portion (1434a) and a second joint portion (1434b),
the first contact portion (1433a) is oil-sealedly connected to the second surface (1442), and the second contact portion (1433b) is oil-sealedly connected to an outer circumferential side of the outer wall surface of the housing (1411), and
the first joint portion (1434a) is oil-sealedly connected to the surface of the substrate (142), and the second joint portion (1434b) is oil-sealedly connected to at least a part of an outer circumferential side of an outer wall surface of the base (144).

5. The electric pump according to any one of claims 2 to 4, wherein
the sealing portion (143) of the control board assembly (14) located outside the matching portion (24) is defined as a first sealing portion (143), and
the control board assembly (14) is provided with a second sealing portion (143) at the matching portion (24) to prevent the working medium from entering a portion where the first end portion (1413) of the at least one of the electronic components (141) is located.

6. The electric pump according to claim 5, wherein
each electronic component (141) comprises a housing (1411), and the first end portion (1413) comprises an end of the housing (1411) close to the substrate (142),
the matching portion (24) comprises a region between the substrate (142) and the first end portion (1413), and
the sealing portion (143) is oil-sealedly connected to the surface of the substrate (142), and the sealing portion (143) is oil-sealedly connected to an end face of the first end portion (1413).

7. The electric pump according to any one of claims 1 to 6, wherein the control board assembly (14) comprises a protection film (146), and at least a part of a surface of the at least one of the electronic components (141) is covered by the protection film (146).

8. The electric pump according to claim 7, wherein each electronic component (141) comprises a capacitor, and the capacitor is in type of an electrolyte capacitor, a hybrid capacitor or a solid capacitor.

9. The electric pump according to claim 8, wherein
the accommodation chamber comprises a first accommodation chamber (16), a second accommodation chamber (17) and a third accommodation chamber (15),
the first accommodation chamber (16) is located at one side of the control board assembly (14), the second accommodation chamber (17) is located at the other side of the control board assembly (14), the first accommodation chamber (16) is in communication with the second accommodation chamber (17), and the stator assembly (13) is located inside the first accommodation chamber (16),
the electric pump further comprises a first rotor assembly (11), which is located inside the third accommodation chamber (15), wherein a wall surface of the third accommodation chamber (15) comprises a bottom wall (151), which is configured to support the first rotor assembly (11),
the electric pump further comprises a first passage (152), and the first passage (152) runs through an upper surface and a lower surface of the bottom wall (151),
the third accommodation chamber (15) is in communication with the first accommodation chamber (16),
the electric pump further comprises a pump shaft (18), and an end of the pump shaft (18) is connected to the first rotor assembly (11), wherein the pump shaft (18) comprises a second passage (181), and the second passage (181) runs through a first end face and a second end face of the pump shaft (18),
when the electric pump is in operation, a pressure of the working medium at an inlet of the first passage (152) is higher than a pressure of the working medium at an outlet of the second passage (181), wherein the working medium is configured to leave the first accommodation chamber (16) through the second passage (181).

10. A manufacturing method for the electric pump according to claim 1, comprising:
apply a first sealing material to an outer side of the matching portion (24) along a circumferential direction;
solidify the first sealing material, such that the first sealing material is oil-sealedly connected to a surface of a substrate (142), and the first sealing material is oil-sealedly connected to an outer circumferential side of an outer wall surface of a first end portion (1413);
assemble a control board assembly (14) with a stator assembly (13), and locate an assembly of the control board assembly (14) and the stator assembly (13) inside an accommodation chamber of the electric pump, or locate the stator assembly (13) inside the accommodation chamber of the electric pump, assemble the control board assembly inside the accommodation chamber of the electric pump, and electrically connect the control board assembly (14) and the stator assembly (13); and
assemble a first rotor assembly (11) inside the accommodation chamber of the electric pump, wherein a portion where the first rotor assembly (11) is located is in communication with a portion where the control board assembly (14) is located.

11. A manufacturing method for the electric pump according to claim 1, comprising:
apply a second sealing material inside the matching portion (24);
solidify the second sealing material, such that the second sealing material is oil-sealedly connected to a surface of a substrate (142), and the second sealing material is oil-sealedly connected to an end face of a first end portion (1413);
assemble a control board assembly (14) with a stator assembly (13), and locate an assembly of the control board assembly (14) and the stator assembly (13) inside an accommodation chamber of the electric pump, or locate the stator assembly (13) inside the accommodation chamber of the electric pump, assemble the control board assembly (14) inside the accommodation chamber of the electric pump, and electrically connect the control board assembly (14) and the stator assembly (13); and
assemble a first rotor assembly (11) inside the accommodation chamber of the electric pump, wherein a portion where the first rotor assembly (11) is located is in communication with a portion where the control board assembly (14) is located.

12. The manufacturing method for the electric pump according to claim 10 or claim 11, wherein the manufacturing method comprises:
assemble electronic components (141), which comprises: arrange a sealing pad (1412) in a region inside an inner circumferential side of a housing (1411) of each electronic component (141), such that the sealing pad (1412) is oil-sealedly connected to the inner circumferential side of the housing (1411); and
assemble the electronic components (141) with the substrate (142).

13. The manufacturing method for the electric pump according to claim 12, wherein the manufacturing method comprises:
apply a second sealing material to a region between the housing (1411) and the substrate (142); and/or
apply the second sealing material to a region between the sealing pad (1412) and the substrate (142).

14. The manufacturing method for the electric pump according to claim 10, wherein the manufacturing method comprises:
apply a second sealing material to a region between a housing (1411) and the substrate (142).

15. The manufacturing method for the electric pump according to any one of claims 10 to 14, wherein the manufacturing method comprises:
assemble electronic components (141), which comprises assemble a housing (1411) and a base (144); and
apply a first sealing material to an outer side of a position where the base (144) and the housing (1411) are connected in a circumferential direction, apply the first sealing material to an outer side of a position where the base (144) and the substrate (142) are connected in the circumferential direction; and/or apply a second sealing material to a region between the base (144) and the substrate (142).

## Patentansprüche

1. Elektrische Pumpe, umfassend eine Statorbaugruppe (13) und eine Steuerplatinenbaugruppe (14), die elektrisch miteinander verbunden sind, wobei
die elektrische Pumpe eine Aufnahmekammer umfasst und die Steuerplatinenbaugruppe (14) ein Substrat (142) und elektronische Komponenten (141) umfasst, wobei das Substrat (142) innerhalb der Aufnahmekammer angeordnet ist und die elektronischen Komponenten (141) innerhalb der Aufnahmekammer angeordnet sind,
zumindest eine der elektronischen Komponenten (141) einen Stift und einen dem Substrat (142) zugewandten ersten Endabschnitt (1413) umfasst, der Stift der zumindest einen elektronischen Komponente (141) elektrisch mit dem Substrat (142) verbunden ist und der erste Endabschnitt (1413) und der Stift der zumindest einen elektronischen Komponente (141) auf derselben Seite angeordnet sind,
**dadurch gekennzeichnet, dass**
bei Betrieb der elektrischen Pumpe ein Arbeitsmedium innerhalb der Aufnahmekammer vorgesehen ist und die elektronischen Komponenten (141) und das Substrat (142) mit dem Arbeitsmedium in Kontakt stehen,
ein Abschnitt, in dem das Substrat (142) mit der zumindest einen elektronischen Komponente (141) zusammenpasst, als ein Passungsabschnitt (24) definiert ist, und die Steuerplatinenbaugruppe (14) an dem Passungsabschnitt (24) mit einem Dichtungsabschnitt (143) versehen ist oder die Steuerplatinenbaugruppe (14) außerhalb des Passungsabschnitts (24) nur an dem ersten Endabschnitt (1413) mit einem Dichtungsabschnitt (143) versehen ist, um zu verhindern, dass das Arbeitsmedium in einen Abschnitt eintritt, in dem der erste Endabschnitt (1413) der zumindest einen elektronischen Komponente (141) angeordnet ist, und der Dichtungsabschnitt (143) öldicht mit einer Oberfläche des Substrats (142) verbunden ist.

2. Elektrische Pumpe nach Anspruch 1, wobei
jede elektronische Komponente (141) ein Gehäuse (1411) und ein Dichtungspolster (1412) umfasst und das Dichtungspolster (1412) öldicht mit einer Innenumfangsseite des Gehäuses (1411) verbunden ist,
das Dichtungspolster (1412) eine Vorderfläche (1412a) und eine Rückfläche (1412b) umfasst und die Vorderfläche (1412a) in einer axialen Richtung der elektrischen Pumpe näher an dem Substrat (142) angeordnet ist als die Rückfläche (1412b), und
das Dichtungspolster (1412) einen inneren Seitenbereich innerhalb der Innenumfangsseite des Gehäuses (1411) abdeckt und der erste Endabschnitt (1413) die Vorderfläche (1412a) des Dichtungspolsters (1412) umfasst.

3. Elektrische Pumpe nach Anspruch 1 oder Anspruch 2, wobei
jede elektronische Komponente ein Gehäuse (1411) umfasst und der erste Endabschnitt (1413) ein nahe dem Substrat (142) liegendes Ende des Gehäuses (1411) umfasst,
der Passungsabschnitt (24) einen Abschnitt umfasst, in dem das Substrat (142) und das Gehäuse (1411) miteinander zusammenpassen, und der Dichtungsabschnitt (143) einen Bodenabschnitt (1432) und einen Seitenabschnitt (1431) umfasst, und
der Seitenabschnitt (1431) öldicht mit einer Umfangsseite einer Außenwandfläche des ersten Endabschnitts (1413) verbunden ist und der Bodenabschnitt (1432) öldicht mit der Oberfläche des Substrats (142) verbunden ist.

4. Elektrische Pumpe nach Anspruch 1 oder Anspruch 2, wobei
jede elektronische Komponente (141) eine Basis (144) und ein Gehäuse (1411) umfasst;
die Basis (144) fest mit dem Gehäuse (1411) verbunden ist und die Basis (144) fest mit dem Substrat (142) verbunden ist,
die Basis (144) eine erste Oberfläche (1441) und eine zweite Oberfläche (1442) umfasst und die zweite Oberfläche (1442) in einer axialen Richtung der elektrischen Pumpe weiter von dem Substrat (142) entfernt angeordnet ist als die erste Oberfläche (1441),
der erste Endabschnitt (1413) ein nahe dem Substrat (142) liegendes Ende der Basis (144) und ein nahe dem Substrat (142) liegendes Ende des Gehäuses (1411) umfasst,
der Passungsabschnitt (24) einen Abschnitt umfasst, in dem die Basis (144) und das Substrat miteinander zusammenpassen, und der Passungsabschnitt (24) einen Abschnitt umfasst, in dem das Gehäuse (1411) und das Substrat (142) miteinander zusammenpassen,
der Dichtungsabschnitt (143) einen ersten Abschnitt (1433) und einen zweiten Abschnitt (1434) umfasst, der erste Abschnitt (1433) einen ersten Kontaktabschnitt (1433a) und einen zweiten Kontaktabschnitt (1433b) umfasst und der zweite Abschnitt (1434) einen ersten Verbindungsabschnitt (1434a) und einen zweiten Verbindungsabschnitt (1434b) umfasst,
der erste Kontaktabschnitt (1433a) öldicht mit der zweiten Oberfläche (1442) verbunden ist und der zweite Kontaktabschnitt (1433b) öldicht mit einer Außenumfangsseite der Außenwandfläche des Gehäuses (1411) verbunden ist, und
der erste Verbindungsabschnitt (1434a) öldicht mit der Oberfläche des Substrats (142) verbunden ist und der zweite Verbindungsabschnitt (1434b) öldicht mit zumindest einem Teil einer Außenumfangsseite einer Außenwandfläche der Basis (144) verbunden ist.

5. Elektrische Pumpe nach einem der Ansprüche 2 bis 4, wobei
der außerhalb des Passungsabschnitts (24) angeordnete Dichtungsabschnitt (143) der Steuerplatinenbaugruppe (14) als ein erster Dichtungsabschnitt (143) definiert ist, und
die Steuerplatinenbaugruppe (14) an dem Passungsabschnitt (24) mit einem zweiten Dichtungsabschnitt (143) versehen ist, um zu verhindern, dass das Arbeitsmedium in einen Abschnitt eintritt, in dem der erste Endabschnitt (1413) der zumindest einen elektronischen Komponente (141) angeordnet ist.

6. Elektrische Pumpe nach Anspruch 5, wobei
jede elektronische Komponente (141) ein Gehäuse (1411) umfasst und der erste Endabschnitt (1413) ein nahe dem Substrat (142) liegendes Ende des Gehäuses (1411) umfasst,
der Passungsabschnitt (24) einen Bereich zwischen dem Substrat (142) und dem ersten Endabschnitt (1413) umfasst, und
der Dichtungsabschnitt (143) öldicht mit der Oberfläche des Substrats (142) verbunden ist und der Dichtungsabschnitt (143) öldicht mit einer Endfläche des ersten Endabschnitts (1413) verbunden ist.

7. Elektrische Pumpe nach einem der Ansprüche 1 bis 6, wobei die Steuerplatinenbaugruppe (14) einen Schutzfilm (146) umfasst und zumindest ein Teil einer Oberfläche der zumindest einen elektronischen Komponente (141) durch den Schutzfilm (146) bedeckt ist.

8. Elektrische Pumpe nach Anspruch 7, wobei jede elektronische Komponente (141) einen Kondensator umfasst und der Kondensator vom Typ eines Elektrolytkondensators, eines Hybridkondensators oder eines Feststoffkondensators ist.

9. Elektrische Pumpe nach Anspruch 8, wobei
die Aufnahmekammer eine erste Aufnahmekammer (16), eine zweite Aufnahmekammer (17) und eine dritte Aufnahmekammer (15) umfasst,
die erste Aufnahmekammer (16) an einer Seite der Steuerplatinenbaugruppe (14) angeordnet ist, die zweite Aufnahmekammer (17) an der anderen Seite der Steuerplatinenbaugruppe (14) angeordnet ist, die erste Aufnahmekammer (16) mit der zweiten Aufnahmekammer (17) in Verbindung steht und die Statorbaugruppe (13) innerhalb der ersten Aufnahmekammer (16) angeordnet ist,
die elektrische Pumpe ferner eine erste Rotorbaugruppe (11) umfasst, die innerhalb der dritten Aufnahmekammer (15) angeordnet ist, wobei eine Wandfläche der dritten Aufnahmekammer (15) eine Bodenwand (151) umfasst, die dazu eingerichtet ist, die erste Rotorbaugruppe (11) abzustützen,
die elektrische Pumpe ferner einen ersten Durchgang (152) umfasst und der erste Durchgang (152) durch eine obere Oberfläche und eine untere Oberfläche der Bodenwand (151) verläuft,
die dritte Aufnahmekammer (15) mit der ersten Aufnahmekammer (16) in Verbindung steht,
die elektrische Pumpe ferner eine Pumpenwelle (18) umfasst und ein Ende der Pumpenwelle (18) mit der ersten Rotorbaugruppe (11) verbunden ist, wobei die Pumpenwelle (18) einen zweiten Durchgang (181) umfasst und der zweite Durchgang (181) durch eine erste Endfläche und eine zweite Endfläche der Pumpenwelle (18) verläuft,
bei Betrieb der elektrischen Pumpe ein Druck des Arbeitsmediums an einem Einlass des ersten Durchgangs (152) höher ist als ein Druck des Arbeitsmediums an einem Auslass des zweiten Durchgangs (181), wobei das Arbeitsmedium dazu eingerichtet ist, die erste Aufnahmekammer (16) durch den zweiten Durchgang (181) zu verlassen.

10. Herstellungsverfahren für die elektrische Pumpe nach Anspruch 1, umfassend:
Aufbringen eines ersten Dichtungsmaterials auf eine Außenseite des Passungsabschnitts (24) entlang einer Umfangsrichtung;
Verfestigen des ersten Dichtungsmaterials derart, dass das erste Dichtungsmaterial öldicht mit einer Oberfläche eines Substrats (142) verbunden ist und das erste Dichtungsmaterial öldicht mit einer Außenumfangsseite einer Außenwandfläche eines ersten Endabschnitts (1413) verbunden ist;
Zusammenbauen einer Steuerplatinenbaugruppe (14) mit einer Statorbaugruppe (13) und Anordnen einer Baugruppe aus der Steuerplatinenbaugruppe (14) und der Statorbaugruppe (13) innerhalb einer Aufnahmekammer der elektrischen Pumpe, oder Anordnen der Statorbaugruppe (13) innerhalb der Aufnahmekammer der elektrischen Pumpe, Zusammenbauen der Steuerplatinenbaugruppe innerhalb der Aufnahmekammer der elektrischen Pumpe und elektrisches Verbinden der Steuerplatinenbaugruppe (14) und der Statorbaugruppe (13); und
Zusammenbauen einer ersten Rotorbaugruppe (11) innerhalb der Aufnahmekammer der elektrischen Pumpe, wobei ein Abschnitt, in dem die erste Rotorbaugruppe (11) angeordnet ist, mit einem Abschnitt, in dem die Steuerplatinenbaugruppe (14) angeordnet ist, in Verbindung steht.

11. Herstellungsverfahren für die elektrische Pumpe nach Anspruch 1, umfassend:
Aufbringen eines zweiten Dichtungsmaterials innerhalb des Passungsabschnitts (24);
Verfestigen des zweiten Dichtungsmaterials derart, dass das zweite Dichtungsmaterial öldicht mit einer Oberfläche eines Substrats (142) verbunden ist und das zweite Dichtungsmaterial öldicht mit einer Endfläche eines ersten Endabschnitts (1413) verbunden ist;
Zusammenbauen einer Steuerplatinenbaugruppe (14) mit einer Statorbaugruppe (13) und Anordnen einer Baugruppe aus der Steuerplatinenbaugruppe (14) und der Statorbaugruppe (13) innerhalb einer Aufnahmekammer der elektrischen Pumpe, oder Anordnen der Statorbaugruppe (13) innerhalb der Aufnahmekammer der elektrischen Pumpe, Zusammenbauen der Steuerplatinenbaugruppe (14) innerhalb der Aufnahmekammer der elektrischen Pumpe und elektrisches Verbinden der Steuerplatinenbaugruppe (14) und der Statorbaugruppe (13); und
Zusammenbauen einer ersten Rotorbaugruppe (11) innerhalb der Aufnahmekammer der elektrischen Pumpe, wobei ein Abschnitt, in dem die erste Rotorbaugruppe (11) angeordnet ist, mit einem Abschnitt, in dem die Steuerplatinenbaugruppe (14) angeordnet ist, in Verbindung steht.

12. Herstellungsverfahren für die elektrische Pumpe nach Anspruch 10 oder Anspruch 11, wobei das Herstellungsverfahren umfasst:
Zusammenbauen elektronischer Komponenten (141), wobei das Zusammenbauen umfasst: Anordnen eines Dichtungspolsters (1412) in einem Bereich innerhalb einer Innenumfangsseite eines Gehäuses (1411) jeder elektronischen Komponente (141) derart, dass das Dichtungspolster (1412) öldicht mit der Innenumfangsseite des Gehäuses (1411) verbunden ist; und
Zusammenbauen der elektronischen Komponenten (141) mit dem Substrat (142).

13. Herstellungsverfahren für die elektrische Pumpe nach Anspruch 12, wobei das Herstellungsverfahren umfasst:
Aufbringen eines zweiten Dichtungsmaterials auf einen Bereich zwischen dem Gehäuse (1411) und dem Substrat (142); und/oder
Aufbringen des zweiten Dichtungsmaterials auf einen Bereich zwischen dem Dichtungspolster (1412) und dem Substrat (142).

14. Herstellungsverfahren für die elektrische Pumpe nach Anspruch 10, wobei das Herstellungsverfahren umfasst:
Aufbringen eines zweiten Dichtungsmaterials auf einen Bereich zwischen einem Gehäuse (1411) und dem Substrat (142).

15. Herstellungsverfahren für die elektrische Pumpe nach einem der Ansprüche 10 bis 14, wobei das Herstellungsverfahren umfasst:
Zusammenbauen elektronischer Komponenten (141), wobei das Zusammenbauen das Zusammenbauen eines Gehäuses (1411) und einer Basis (144) umfasst; und
Aufbringen eines ersten Dichtungsmaterials auf eine Außenseite einer Stelle, an der die Basis (144) und das Gehäuse (1411) in einer Umfangsrichtung verbunden sind, Aufbringen des ersten Dichtungsmaterials auf eine Außenseite einer Stelle, an der die Basis (144) und das Substrat (142) in der Umfangsrichtung verbunden sind; und/oder Aufbringen eines zweiten Dichtungsmaterials auf einen Bereich zwischen der Basis (144) und dem Substrat (142).

## Revendications

1. Pompe électrique, comprenant un ensemble statorique (13) et un ensemble de carte de commande (14) qui sont reliés électriquement, dans laquelle
la pompe électrique comprend une chambre de logement, et l'ensemble de carte de commande (14) comprend un substrat (142) et des composants électroniques (141), le substrat (142) étant disposé à l'intérieur de la chambre de logement et les composants électroniques (141) étant disposés à l'intérieur de la chambre de logement,
au moins un des composants électroniques (141) comprend une broche et une première partie d'extrémité (1413) faisant face au substrat (142), la broche dudit au moins un composant électronique (141) est reliée électriquement au substrat (142), et la première partie d'extrémité (1413) et la broche dudit au moins un composant électronique (141) sont disposées du même côté,
**caractérisée en ce que**
lorsque la pompe électrique est en fonctionnement, un milieu de travail est prévu à l'intérieur de la chambre de logement, et les composants électroniques (141) et le substrat (142) sont en contact avec le milieu de travail,
une partie dans laquelle le substrat (142) s'ajuste avec ledit au moins un composant électronique (141) est définie comme une partie d'ajustement (24), et l'ensemble de carte de commande (14) est pourvu d'une partie d'étanchéité (143) au niveau de la partie d'ajustement (24), ou l'ensemble de carte de commande (14) est pourvu d'une partie d'étanchéité (143) à l'extérieur de la partie d'ajustement (24) uniquement au niveau de la première partie d'extrémité (1413), afin d'empêcher le milieu de travail de pénétrer dans une partie dans laquelle est située la première partie d'extrémité (1413) dudit au moins un composant électronique (141), et la partie d'étanchéité (143) est reliée de manière étanche à l'huile à une surface du substrat (142).

2. Pompe électrique selon la revendication 1, dans laquelle
chaque composant électronique (141) comprend un boîtier (1411) et un tampon d'étanchéité (1412), et le tampon d'étanchéité (1412) est relié de manière étanche à l'huile à un côté circonférentiel intérieur du boîtier (1411),
le tampon d'étanchéité (1412) comprend une surface avant (1412a) et une surface arrière (1412b), et la surface avant (1412a) est positionnée plus près du substrat (142) que la surface arrière (1412b) dans une direction axiale de la pompe électrique, et
le tampon d'étanchéité (1412) recouvre une région latérale intérieure à l'intérieur du côté circonférentiel intérieur du boîtier (1411), et la première partie d'extrémité (1413) comprend la surface avant (1412a) du tampon d'étanchéité (1412).

3. Pompe électrique selon la revendication 1 ou la revendication 2, dans laquelle
chaque composant électronique comprend un boîtier (1411), et la première partie d'extrémité (1413) comprend une extrémité du boîtier (1411) proche du substrat (142),
la partie d'ajustement (24) comprend une partie dans laquelle le substrat (142) et le boîtier (1411) s'ajustent l'un avec l'autre, et la partie d'étanchéité (143) comprend une partie de fond (1432) et une partie latérale (1431), et
la partie latérale (1431) est reliée de manière étanche à l'huile à un côté circonférentiel d'une surface de paroi extérieure de la première partie d'extrémité (1413), et la partie de fond (1432) est reliée de manière étanche à l'huile à la surface du substrat (142).

4. Pompe électrique selon la revendication 1 ou la revendication 2, dans laquelle
chaque composant électronique (141) comprend une base (144) et un boîtier (1411);
la base (144) est reliée de manière fixe au boîtier (1411), et la base (144) est reliée de manière fixe au substrat (142),
la base (144) comprend une première surface (1441) et une deuxième surface (1442), et la deuxième surface (1442) est positionnée plus loin du substrat (142) que la première surface (1441) dans une direction axiale de la pompe électrique,
la première partie d'extrémité (1413) comprend une extrémité de la base (144) proche du substrat (142) et une extrémité du boîtier (1411) proche du substrat (142),
la partie d'ajustement (24) comprend une partie dans laquelle la base (144) et le substrat s'ajustent l'un avec l'autre, et la partie d'ajustement (24) comprend une partie dans laquelle le boîtier (1411) et le substrat (142) s'ajustent l'un avec l'autre,
la partie d'étanchéité (143) comprend une première partie (1433) et une deuxième partie (1434), la première partie (1433) comprend une première partie de contact (1433a) et une deuxième partie de contact (1433b), et la deuxième partie (1434) comprend une première partie de jonction (1434a) et une deuxième partie de jonction (1434b),
la première partie de contact (1433a) est reliée de manière étanche à l'huile à la deuxième surface (1442), et la deuxième partie de contact (1433b) est reliée de manière étanche à l'huile à un côté circonférentiel extérieur de la surface de paroi extérieure du boîtier (1411), et
la première partie de jonction (1434a) est reliée de manière étanche à l'huile à la surface du substrat (142), et la deuxième partie de jonction (1434b) est reliée de manière étanche à l'huile à au moins une partie d'un côté circonférentiel extérieur d'une surface de paroi extérieure de la base (144).

5. Pompe électrique selon l'une quelconque des revendications 2 à 4, dans laquelle
la partie d'étanchéité (143) de l'ensemble de carte de commande (14) située à l'extérieur de la partie d'ajustement (24) est définie comme une première partie d'étanchéité (143), et
l'ensemble de carte de commande (14) est pourvu d'une deuxième partie d'étanchéité (143) au niveau de la partie d'ajustement (24), afin d'empêcher le milieu de travail de pénétrer dans une partie dans laquelle est située la première partie d'extrémité (1413) dudit au moins un composant électronique (141).

6. Pompe électrique selon la revendication 5, dans laquelle
chaque composant électronique (141) comprend un boîtier (1411), et la première partie d'extrémité (1413) comprend une extrémité du boîtier (1411) proche du substrat (142),
la partie d'ajustement (24) comprend une région entre le substrat (142) et la première partie d'extrémité (1413), et
la partie d'étanchéité (143) est reliée de manière étanche à l'huile à la surface du substrat (142), et la partie d'étanchéité (143) est reliée de manière étanche à l'huile à une face d'extrémité de la première partie d'extrémité (1413).

7. Pompe électrique selon l'une quelconque des revendications 1 à 6, dans laquelle l'ensemble de carte de commande (14) comprend un film de protection (146), et au moins une partie d'une surface dudit au moins un composant électronique (141) est recouverte par le film de protection (146).

8. Pompe électrique selon la revendication 7, dans laquelle chaque composant électronique (141) comprend un condensateur, et le condensateur est du type d'un condensateur électrolytique, d'un condensateur hybride ou d'un condensateur solide.

9. Pompe électrique selon la revendication 8, dans laquelle
la chambre de logement comprend une première chambre de logement (16), une deuxième chambre de logement (17) et une troisième chambre de logement (15),
la première chambre de logement (16) est disposée d'un côté de l'ensemble de carte de commande (14), la deuxième chambre de logement (17) est disposée de l'autre côté de l'ensemble de carte de commande (14), la première chambre de logement (16) est en communication avec la deuxième chambre de logement (17), et l'ensemble statorique (13) est disposé à l'intérieur de la première chambre de logement (16),
la pompe électrique comprend en outre un premier ensemble rotorique (11), qui est disposé à l'intérieur de la troisième chambre de logement (15), une surface de paroi de la troisième chambre de logement (15) comprenant une paroi de fond (151) qui est configurée pour supporter le premier ensemble rotorique (11),
la pompe électrique comprend en outre un premier passage (152), et le premier passage (152) traverse une surface supérieure et une surface inférieure de la paroi de fond (151),
la troisième chambre de logement (15) est en communication avec la première chambre de logement (16),
la pompe électrique comprend en outre un arbre de pompe (18), et une extrémité de l'arbre de pompe (18) est reliée au premier ensemble rotorique (11), l'arbre de pompe (18) comprenant un deuxième passage (181), et le deuxième passage (181) traversant une première face d'extrémité et une deuxième face d'extrémité de l'arbre de pompe (18),
lorsque la pompe électrique est en fonctionnement, une pression du milieu de travail à une entrée du premier passage (152) est supérieure à une pression du milieu de travail à une sortie du deuxième passage (181), le milieu de travail étant configuré pour quitter la première chambre de logement (16) par le deuxième passage (181).

10. Procédé de fabrication de la pompe électrique selon la revendication 1, comprenant:
l'application d'un premier matériau d'étanchéité sur un côté extérieur de la partie d'ajustement (24) le long d'une direction circonférentielle;
la solidification du premier matériau d'étanchéité de sorte que le premier matériau d'étanchéité soit relié de manière étanche à l'huile à une surface d'un substrat (142), et que le premier matériau d'étanchéité soit relié de manière étanche à l'huile à un côté circonférentiel extérieur d'une surface de paroi extérieure d'une première partie d'extrémité (1413);
l'assemblage d'un ensemble de carte de commande (14) avec un ensemble statorique (13), et la disposition d'un assemblage de l'ensemble de carte de commande (14) et de l'ensemble statorique (13) à l'intérieur d'une chambre de logement de la pompe électrique, ou la disposition de l'ensemble statorique (13) à l'intérieur de la chambre de logement de la pompe électrique, l'assemblage de l'ensemble de carte de commande à l'intérieur de la chambre de logement de la pompe électrique, et la connexion électrique de l'ensemble de carte de commande (14) et de l'ensemble statorique (13); et
l'assemblage d'un premier ensemble rotorique (11) à l'intérieur de la chambre de logement de la pompe électrique, une partie dans laquelle le premier ensemble rotorique (11) est disposé étant en communication avec une partie dans laquelle l'ensemble de carte de commande (14) est disposé.

11. Procédé de fabrication de la pompe électrique selon la revendication 1, comprenant:
l'application d'un deuxième matériau d'étanchéité à l'intérieur de la partie d'ajustement (24);
la solidification du deuxième matériau d'étanchéité de sorte que le deuxième matériau d'étanchéité soit relié de manière étanche à l'huile à une surface d'un substrat (142), et que le deuxième matériau d'étanchéité soit relié de manière étanche à l'huile à une face d'extrémité d'une première partie d'extrémité (1413);
l'assemblage d'un ensemble de carte de commande (14) avec un ensemble statorique (13), et la disposition d'un assemblage de l'ensemble de carte de commande (14) et de l'ensemble statorique (13) à l'intérieur d'une chambre de logement de la pompe électrique, ou la disposition de l'ensemble statorique (13) à l'intérieur de la chambre de logement de la pompe électrique, l'assemblage de l'ensemble de carte de commande (14) à l'intérieur de la chambre de logement de la pompe électrique, et la connexion électrique de l'ensemble de carte de commande (14) et de l'ensemble statorique (13); et
l'assemblage d'un premier ensemble rotorique (11) à l'intérieur de la chambre de logement de la pompe électrique, une partie dans laquelle le premier ensemble rotorique (11) est disposé étant en communication avec une partie dans laquelle l'ensemble de carte de commande (14) est disposé.

12. Procédé de fabrication de la pompe électrique selon la revendication 10 ou la revendication 11, dans lequel le procédé de fabrication comprend:
l'assemblage de composants électroniques (141), cet assemblage comprenant: la disposition d'un tampon d'étanchéité (1412) dans une région à l'intérieur d'un côté circonférentiel intérieur d'un boîtier (1411) de chaque composant électronique (141), de sorte que le tampon d'étanchéité (1412) soit relié de manière étanche à l'huile au côté circonférentiel intérieur du boîtier (1411); et
l'assemblage des composants électroniques (141) avec le substrat (142).

13. Procédé de fabrication de la pompe électrique selon la revendication 12, dans lequel le procédé de fabrication comprend:
l'application d'un deuxième matériau d'étanchéité sur une région entre le boîtier (1411) et le substrat (142); et/ou
l'application du deuxième matériau d'étanchéité sur une région entre le tampon d'étanchéité (1412) et le substrat (142).

14. Procédé de fabrication de la pompe électrique selon la revendication 10, dans lequel le procédé de fabrication comprend:
l'application d'un deuxième matériau d'étanchéité sur une région entre un boîtier (1411) et le substrat (142).

15. Procédé de fabrication de la pompe électrique selon l'une quelconque des revendications 10 à 14, dans lequel le procédé de fabrication comprend:
l'assemblage de composants électroniques (141), cet assemblage comprenant l'assemblage d'un boîtier (1411) et d'une base (144); et
l'application d'un premier matériau d'étanchéité sur un côté extérieur d'une position à laquelle la base (144) et le boîtier (1411) sont reliés dans une direction circonférentielle, l'application du premier matériau d'étanchéité sur un côté extérieur d'une position à laquelle la base (144) et le substrat (142) sont reliés dans la direction circonférentielle; et/ou l'application d'un deuxième matériau d'étanchéité sur une région entre la base (144) et le substrat (142).
